(19) Europäisches Patentamt / European Patent Office / Office européen des brevets

(11) **EP 3 623 758 B1**

(12) **FASCICULE DE BREVET EUROPEEN**

(45) Date de publication et mention
de la délivrance du brevet:
**21.04.2021 Bulletin 2021/16**

(51) Int Cl.:
***G01C 21/16*** *(2006.01)*

(21) Numéro de dépôt: **19196884.1**

(22) Date de dépôt: **12.09.2019**

(54) **SYSTÈME DE LOCALISATION, ET PROCÉDÉ DE LOCALISATION ASSOCIÉ**

STANDORTBESTIMMUNGSSYSTEM UND ENTSPRECHENDES
STANDORTBESTIMMUNGSVERFAHREN

POSITIONING SYSTEM, AND ASSOCIATED METHOD FOR POSITIONING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.09.2018 FR 1800973**

(43) Date de publication de la demande:
**18.03.2020 Bulletin 2020/12**

(73) Titulaire: **Ixblue
78100 Saint-Germain-en-Laye (FR)**

(72) Inventeurs:
• **GLEVAREC, Sophie
78100 Saint-Germain-en-Laye (FR)**
• **MICHEL, Jean-Philippe
78100 Saint-Germain-en-Laye (FR)**
• **NAPOLITANO, Fabien
78100 Saint-Germain-en-Laye (FR)**
• **PICARD, Guillaume
78100 Saint-Germain-en-Laye (FR)**
• **PUCHOL, Martin
78100 Saint-Germain-en-Laye (FR)**

(74) Mandataire: **Jacobacci Coralis Harle
32, rue de l'Arcade
75008 Paris (FR)**

(56) Documents cités:
**US-A1- 2012 166 134    US-A1- 2016 223 683**

**Description**

DOMAINE TECHNIQUE AUQUEL SE RAPPORTE L'INVENTION

La présente invention concerne un système de localisation, et un procédé de localisation associé.

Elle concerne plus particulièrement un système de localisation comprenant :

- une unité de mesure inertielle qui comporte au moins un accéléromètre ou un gyromètre,
- un capteur pour mesurer un paramètre de positionnement du système, tel qu'un dispositif de localisation par signaux GPS (selon l'acronyme anglo-saxon de « Global Positioning System »), et
- un filtre de navigation, par exemple un filtre de Kalman, configuré pour déterminer un paramètre de positionnement estimé, en fonction d'un signal inertiel délivré par l'unité de mesure inertielle, et en fonction d'un signal de mesure délivré par le capteur précité.

ARRIERE-PLAN TECHNOLOGIQUE

Il est courant d'équiper un véhicule, un navire, ou un aéronef avec un système de localisation permettant de repérer ce dernier par rapport à son environnement.

Il est connu en particulier d'estimer la position d'un navire ou d'un aéronef en combinant des informations provenant, d'une part, d'une unité de mesure inertielle comprenant un accéléromètre et un gyromètre, et, d'autre part, d'un dispositif de localisation par signaux GPS, la combinaison de ces informations étant réalisée au moyen d'un filtre de Kalman.

Pour cela, le filtre de Kalman :

- détermine une position estimée, par intégration temporelle d'un signal inertiel délivrée par l'unité de mesure inertielle (cette opération est parfois appelée « étape de prédiction »), puis
- corrige cette position estimée, en la recallant sur une position mesurée par le dispositif de localisation par signaux GPS (cette opération étant parfois appelée « étape de mise à jour »),

et ainsi de suite, de manière itérative.

Un tel filtre de Kalman permet, compte tenu des précisions respectives de l'unité de mesure inertielle et du dispositif de localisation, d'estimer de manière optimale la position du navire ou de l'aéronef (la position estimée mentionnée ci-dessus correspondant, après correction, à une estimation optimale de la position réelle du navire ou de l'aéronef, c'est-à-dire à une estimation minimisant la variance de l'écart entre la position estimée et la position réelle du système).

Le système décrit ci-dessus comprend une seule unité de mesure inertielle, et un seul dispositif de localisation par signaux GPS.

Pour améliorer la précision et la fiabilité d'un tel système, il est intéressant de l'équiper de plusieurs unités de mesure inertielle, au cas où l'une des unités de mesure tomberait en panne, ou se mettrait à dériver fortement.

La question se pose alors de savoir comment combiner les informations fournies par ces différentes unités de mesure inertielle, de manière à obtenir à nouveau une estimation optimale (et en l'occurrence meilleure que celle qui serait obtenue avec une seule unité de mesure inertielle) de la position réelle du navire ou de l'aéronef.

Pour cela, une solution consiste à :

- déterminer un signal inertiel moyen, en moyennant les signaux inertiels provenant des différentes unités de mesure inertielle, puis à
- estimer la position du navire ou de l'aéronef, au moyen d'un filtre de Kalman tel que décrit ci-dessus, recevant en entrée ce signal inertiel moyen, ainsi que la position mesurée par le dispositif de localisation par signaux GPS.

Tout se passe alors comme si le système était équipé d'une seule unité de mesure inertielle, virtuelle, de précision améliorée par rapport à l'une des unités de mesure inertielle individuelles du système (grâce au moyennage entre les différents signaux inertiels).

Cette solution peut conduire à une estimation optimale de la position du navire ou de l'aéronef, et peut être mise en œuvre avec des ressources de calcul limitées. En revanche, elle ne permet pas d'identifier une unité de mesure qui serait défaillante ou qui présenterait une forte dérive, puisque les signaux délivrés par les différentes unités de mesure sont fusionnés entre eux (et intégrés temporellement), avant d'être comparés à la position mesurée par le dispositif de localisation par signaux GPS.

On connait par ailleurs, du document Neal A. Carlson : « Federated Square Root Filter for Decentralized Parallel Processes » IEEE Transactions on aerospace and electronic systems, vol. 26, no. 3, Mai 1990, pages 517 à 525 (désigné dans la suite comme le document « Carlson »), une autre méthode d'estimation de l'état d'un système de navigation, basée sur un ensemble de plusieurs filtres de Kalman individuels fonctionnant en parallèle.

Ce système comprend plusieurs dispositifs de localisation par signaux GPS, et un dispositif de navigation inertiel servant de référence commune. Chaque filtre de Kalman individuel reçoit en entrée un signal délivré par l'un des dispositifs de localisation par signaux GPS auquel il est associé, ainsi qu'un signal de référence commun délivré par le dispositif de navigation inertiel. Ce filtre délivre alors en sortie une estimation du vecteur d'état du système de navigation.

Un vecteur d'état global du système de navigation est ensuite déterminé en calculant une moyenne pondérée des différents vecteurs d'état estimés respectivement par ces filtres de Kalman individuels.

Le document Carlson enseigne alors qu'il est indispensable, pour que le vecteur d'état global mentionné ci-dessus corresponde à une estimation optimale de l'état du système, de réinjecter ce vecteur d'état global en entrée de chaque filtre de Kalman individuel et de réinitialiser le filtre de Kalman individuel sur la base de ce vecteur d'état global à chaque itération (à chaque itération des opérations de prévision et de mise à jour). Dans un tel système, les filtres de Kalman individuels ne fonctionnent donc pas de manière indépendante les uns par rapport aux autres, ce qui limite fortement les possibilités de détection d'une défaillance de l'un des capteurs individuels . Le document US2016/223683 A1 divulgue un positionnement hybride GNSS/INS, dans lequel les mesures de plusieurs récepteurs GNSS sont combinées en une solution de position GNSS moyenne, et dans lequel plusieurs capteurs IMU sont utilisés comme entrée de filtres INS parallèles, dont les sorties sont combinées en une seule solution de position INS moyenne. Les solutions moyennes GNSS et INS sont combinées en une solution hybride.

OBJET DE L'INVENTION

Afin de remédier aux inconvénients précités de l'état de la technique, la présente invention propose un système de localisation comprenant :

- plusieurs unités de mesure inertielle, chaque unité de mesure inertielle comprenant au moins un capteur inertiel, accéléromètre ou gyromètre, configuré pour délivrer un signal inertiel représentatif d'une accélération ou d'une vitesse angulaire de rotation de l'unité de mesure inertielle,
- au moins un capteur commun, configuré pour délivrer une mesure d'un paramètre de positionnement du système, ladite mesure étant affectée par un bruit de mesure,
- pour chaque unité de mesure inertielle, un filtre de navigation individuel configuré pour :

a) déterminer une estimation dudit paramètre de positionnement, sur la base du signal inertiel délivré par ladite unité de mesure inertielle, et pour

b) déterminer une estimation corrigée dudit paramètre de positionnement en ajoutant à ladite estimation déterminée précédemment à l'étape a) un terme correctif égal à un gain de correction multiplié par une différence entre, d'une part, ladite mesure du paramètre de positionnement du système, et, d'autre part, le produit d'une matrice de mesure multipliée par ladite estimation du paramètre de positionnement ou multipliée par une somme de ladite estimation et d'une erreur estimée affectant ladite estimation, la matrice de mesure représentant la manière dont ladite mesure dépend du paramètre de positionnement du système, le gain de correction étant déterminé en fonction d'une variance augmentée qui est supérieure à la variance du bruit de mesure du capteur commun, et

- au moins un module de fusion configuré pour déterminer une estimation moyenne dudit paramètre de positionnement du système en calculant une moyenne d'un nombre donné desdites estimations corrigées dudit paramètre de positionnement, ledit nombre étant supérieur ou égal à deux et inférieur ou égal au nombre desdites unités de mesure inertielle que comprend le système de localisation,

le système étant configuré de sorte que chaque filtre de navigation individuel exécute plusieurs fois successivement l'ensemble des étapes a) et b) sans tenir compte de ladite estimation moyenne déterminée par le module de fusion.

La moyenne calculée par le module de fusion est une moyenne arithmétique, pondérée ou non.

Dans ce système, comme l'estimation moyenne du paramètre de positionnement du système n'est pas réinjectée en entrée des filtres de navigation individuels, tout au moins pas à chaque pas de calcul, les différents filtres de navigation opèrent indépendamment les uns des autres. Il est donc possible, contrairement à la solution décrite dans le document Carlson, de détecter que l'une des unités de mesure inertielle est défaillante, ou qu'elle présente une forte dérive (en comparant entre elles les estimations du paramètre de positionnement produites par les différents filtres de navigation). En outre du fait de cette indépendance entre filtres, le système de localisation peut être mis en œuvre même avec des moyens de calcul limités, et même si les filtres n'opèrent pas de manière synchrone.

Le demandeur a constaté en outre, de manière surprenante, qu'un tel système de localisation sans réinjection systématique de l'estimation moyenne en entrée des filtres de navigation individuels, peut conduire à une estimation optimale du paramètre de positionnement du système. Ce résultat surprenant va à l'encontre de l'enseignement du document Carlson : selon ce document, l'estimation de la position du système est nécessairement sub-optimale lorsque les filtres de navigation fonctionnent indépendamment les uns des autres (conclusion du document Carlson, à la fin de la page 524 de ce document), si bien que ce document dissuade d'employer des filtres individuels sans réinjection lorsqu'une estimation optimale est recherchée.

Il est d'ailleurs suffisant en outre, de manière non limitative, qu'un écart relatif, entre les rapports signal sur bruit respectifs de deux quelconques desdits signaux inertiels délivrés respectivement par lesdites unités de mesure, soit inférieur à 30 %.

Le demandeur a constaté que le fait d'employer des unités de mesure inertielle de même rapport signal sur bruit, et de paramétrer chaque filtre de navigation par ladite variance augmentée rend ladite estimation moyenne optimale. Une justification mathématique de cette propriété intéressante est développée plus loin, dans la description.

Employer des unités de mesure inertielle présentant des rapports signal sur bruit proches, comme indiqué ci-dessus, assure alors que ladite estimation moyenne du paramètre de positionnement du système soit proche d'une estimation optimale du paramètre de positionnement (réel) du système.

D'autres caractéristiques non limitatives et avantageuses du système de localisation conforme à l'invention, prises individuellement ou selon toutes les combinaisons techniquement possibles, sont les suivantes :

- un écart relatif entre ladite variance augmentée et une variance augmentée optimale est inférieur à 30%, ladite variance augmentée optimale étant égale à la variance du bruit de mesure du capteur commun multipliée par le nombre desdites estimations dudit paramètre de positionnement, dont la moyenne est calculée par le module de fusion pour déterminer ladite estimation moyenne ;

- les filtres de navigation individuels sont des filtres de Kalman modifiés, chacun de ces filtres étant configuré pour :

  - estimer une matrice de covariance $P_n^{k,i}$ d'un écart entre ladite estimation du paramètre de positionnement du système et ce paramètre de positionnement, et pour

  - déterminer ledit gain de correction de manière à ce qu'il présente, avec un gain optimal, un écart relatif inférieur à 30%,

  ledit gain optimal étant égal à la quantité suivante : $P_n^{k,i} \ H_n^T \ S_n^{-1}$, où $H_n^T$ est la matrice transposée de la matrice de mesure $H_n$, et où $S_n^{-1}$ est l'inverse d'une matrice de covariance d'innovation $S_n$ égale à $H_n \ P_n^{k,i} \ H_n^T + V_{aug}$, $V_{aug}$ étant ladite variance augmentée ;

- chaque filtre de navigation individuel est configuré de sorte que, lors d'une première exécution de l'étape a), la matrice de covariance $P_n^{k,i}$ de l'écart entre ladite estimation du paramètre de positionnement du système et ce paramètre de positionnement, est estimée en fonction d'une matrice de covariance initiale, et d'une matrice de bruit de propagation comprenant au moins

  - une première composante, représentative de la variance d'un bruit affectant le signal inertiel délivré par l'unité de mesure inertielle associée audit filtre de navigation individuel, et

  - une deuxième composante, représentative d'une variance augmentée qui est associée à des bruits externes indépendants de ladite unité de mesure inertielle, ladite variance augmentée étant supérieure et proportionnelle à la variance desdits bruits externes ;

- le système de localisation comprend en outre, pour chaque unité de mesure inertielle, un filtre de Kalman conventionnel configuré pour :

  - déterminer une estimation supplémentaire dudit paramètre de positionnement du système, sur la base du signal inertiel délivré par ladite unité de mesure inertielle,

  - estimer une matrice de covariance supplémentaire $P_n^{1,i}$ d'un écart entre ladite estimation supplémentaire et ledit paramètre de positionnement du système, et pour

  - déterminer une estimation supplémentaire corrigée dudit paramètre de positionnement en ajoutant à ladite estimation supplémentaire déterminée précédemment un terme correctif égal à un gain de correction supplémentaire multiplié par une différence entre, d'une part, ladite mesure du paramètre de positionnement du système, et, d'autre part, le produit de la matrice de mesure multipliée par ladite estimation supplémentaire ou multipliée par une somme de ladite estimation supplémentaire et d'une erreur estimée supplémentaire affectant ladite estimation supplémentaire, le gain de correction supplémentaire étant déterminé en fonction de la variance du bruit de mesure du capteur commun ;

- le gain de correction supplémentaire est égal à la quantité suivante : $P_n^{1,i} \, H_n^{\top} \, (S_n^1)^{-1}$ , où $H_n^{\top}$ est la matrice transposée de la matrice de mesure $H_n$, et où $(S_n^1)^{-1}$ est l'inverse d'une matrice de covariance d'innovation supplémentaire $S_n^1$ égale à $H_n \, P_n^{1,i} \, H_n^{\top} + R_n$, $R_n$ étant ladite variance dudit bruit de mesure ;

- le système de localisation comprend en outre un module de détection d'erreur configuré de manière à, pour au moins deux desdites unités de mesure inertielle :

  - calculer la différence entre les deux estimations supplémentaires corrigées du paramètre de positionnement qui ont été déterminées respectivement sur la base des signaux délivrés par ces deux unités de mesure inertielle,
  - déterminer une matrice de covariance attendue pour ladite différence, en fonction des matrices de covariance supplémentaires $P_n^{1,i}$ et $P_n^{1,j}$ des deux estimations supplémentaires qui ont été déterminées respectivement sur la base des signaux inertiels délivrés par lesdites deux unités de mesure inertielle, et en fonction des matrices de covariance $P_n^{k,i}$ et $P_n^{k,j}$ des deux estimations du paramètre de positionnement qui ont été déterminées respectivement sur la base de ces mêmes signaux inertiels,
  - tester, au moyen d'un test statistique, si ladite différence est compatible, ou incompatible, avec ladite matrice de covariance attendue, et
  - en cas d'incompatibilité, déterminer qu'une erreur est survenue dans le fonctionnement de l'une desdites deux unités de mesure inertielle ;

- ladite matrice de covariance attendue est égale à la somme des matrices de covariance supplémentaires $P_n^{1,i}$ et $P_n^{1,j}$, moins une estimation de la corrélation entre lesdites estimations supplémentaires corrigées dont la différence a été calculée ;

- ladite estimation de la corrélation entre lesdites estimations supplémentaires corrigées est déterminée en fonction d'une différence entre, d'une part, la somme des matrices de covariance supplémentaires $P_n^{1,i}$ et $P_n^{1,j}$ déterminée par les filtres de Kalman conventionnels (sans variance augmentée), et, d'autre part, la somme des matrices de covariance $P_n^{k,i}$ et $P_n^{k,j}$ ;

- ledit test statistique est un test du khi2 ;

- ladite matrice de covariance attendue est déterminée en fonction d'une matrice de covariance corrigée égale à $P_n^{1,i} + P_n^{1,j} - \frac{1}{k-1}(P_n^{k,i} + P_n^{k,j} - P_n^{1,i} - P_n^{1,j})$, où k est le nombre d'estimations du paramètre de positionnement dont la moyenne est calculée par le module de fusion pour déterminer ladite estimation moyenne ;

- le module de fusion est configuré pour déterminer une estimation d'une matrice de covariance de ladite estimation moyenne, en fonction :

  - d'une moyenne arithmétique desdites matrices de covariance $P_n^{k,i}$ associées respectivement auxdites estimations corrigée du paramètre de positionnement dont la moyenne est calculée par le module de fusion pour déterminer ladite estimation moyenne, ou en fonction

  - de l'inverse d'une moyenne arithmétique des inverses dites matrices de covariance $P_n^{k,i}$ associées respectivement auxdites estimations corrigées du paramètre de positionnement dont la moyenne est calculée par le module de fusion pour déterminer ladite estimation moyenne ;

- un écart relatif entre deux desdits gains de correction, déterminés respectivement par deux quelconque desdits filtres de navigation individuels, est inférieur à 20% ;
- les filtres de navigation sont synchrones ;
- les gains de correction respectifs des différents filtres de navigation sont égaux à un même gain de correction commun dont la valeur est, à chaque répétition des étapes b), calculée une seule fois pour l'ensemble desdits filtres de navigation ;
- les unités de mesure inertielle sont au nombre de N, et le module de fusion est configuré pour :

  - déterminer ladite estimation moyenne du paramètre de positionnement du système en calculant la moyenne d'un ensemble de k estimations corrigées dudit paramètre de positionnement, parmi les N estimations corrigées de ce paramètre de positionnement déterminées respectivement par les filtres de navigation individuels, le nombre entier k étant inférieur ou égal à N, et pour
  - déterminer au moins une autre estimation moyenne du paramètre de positionnement du système, en calculant la moyenne d'un autre ensemble de k estimations corrigées dudit paramètre de positionnement parmi les N estimations corrigées de ce paramètre de positionnement déterminées respectivement par les filtres de navigation individuels ;

- le module de fusion est configuré de manière à, pour chaque ensemble de k estimations corrigées dudit paramètre de positionnement parmi les N estimations corrigées de ce paramètre de positionnement déterminées par les filtres de navigation individuels, déterminer une estimation moyenne du paramètre de positionnement égale à la moyenne des k estimations corrigées du paramètre de positionnement que comprend ledit ensemble ;
- ledit paramètre de positionnement comprend l'une des grandeurs suivantes :

  - une longitude, une latitude, ou une altitude repérant le système de localisation,
  - une composante de la vitesse du système de localisation par rapport au référentiel terrestre,
  - un angle de cap, un angle de roulis ou un angle de tangage du système de localisation, par rapport au référentiel terrestre ;
  - chaque filtre de navigation est configuré pour déterminer une estimation d'un vecteur d'état du système, l'une des composantes de ce vecteur d'état étant ledit paramètre de positionnement, une autre composante comprenant l'une des grandeurs suivantes :

    - une longitude, une latitude, ou une altitude repérant le système de localisation,
    - une composante de la vitesse du système de localisation par rapport au référentiel terrestre,
    - un angle de cap, un angle de roulis ou un angle de tangage du système de localisation, par rapport au référentiel terrestre,
    - un paramètre de résidu de calibration de l'une des unités de mesure inertielle, par exemple un biais résiduel de l'un des accéléromètres,
    - une anomalie de gravité,
    - une vitesse d'un courant marin,
    - un paramètre de calibration dudit capteur commun,
    ou un écart entre l'une des grandeurs précédentes et une estimation de ladite grandeur ;

- le système de localisation comprend au moins deux capteurs communs configurés pour délivrer respectivement deux mesures dudit paramètre de positionnement, et dans lequel chaque filtre de navigation individuel est configuré pour, à l'étape b), recaler ladite estimation du paramètre de positionnement en tenant compte de ces deux mesures ;

L'invention concerne également un procédé de localisation d'un système, au cours duquel :

- plusieurs unités de mesure inertielle délivrent chacune un signal inertiel représentatif d'une accélération ou d'une vitesse angulaire de rotation de l'unité de mesure inertielle,
- au moins un capteur commun délivre une mesure d'un paramètre de positionnement du système, ladite mesure étant affectée par un bruit de mesure,
- pour chaque unité de mesure inertielle, un filtre de navigation individuel :

  a) détermine une estimation dudit paramètre de positionnement, sur la base du signal inertiel délivré par ladite unité de mesure inertielle, et
  b) détermine une estimation corrigée dudit paramètre de positionnement en ajoutant à ladite estimation déterminée précédemment à l'étape a) un terme correctif égal à un gain de correction multiplié par une différence entre, d'une part, ladite mesure du paramètre de positionnement du système, et, d'autre part, le produit d'une matrice de mesure multipliée par ladite estimation du paramètre de positionnement ou multipliée par une somme de ladite estimation et d'une erreur estimée affectant ladite estimation, la matrice de mesure représentant la manière dont ladite mesure dépend du paramètre de positionnement du système, le gain de correction étant déterminé en fonction d'une variance augmentée qui est supérieure à la variance du bruit de mesure du capteur commun, et

- au moins un module de fusion détermine une estimation moyenne dudit paramètre de positionnement du système en calculant une moyenne d'un nombre donné desdites estimations corrigées du paramètre de positionnement, ledit nombre étant supérieur ou égal à deux et inférieur ou égal au nombre d'unités de mesure inertielle que comprend le système,

chaque filtre de navigation individuel exécutant plusieurs fois successivement l'ensemble des étapes a) et b) sans tenir compte de ladite estimation moyenne déterminée par le module de fusion.

Les différentes caractéristiques optionnelles présentées ci-dessus en termes de système peuvent aussi s'appliquer au procédé qui vient d'être décrit.

DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.
Sur les dessins annexés :

- la figure 1 représente schématiquement un navire, muni d'un système de localisation conforme à l'invention,
- la figure 2 représente schématiquement les principaux éléments du système de localisation de la figure 1,
- la figure 3 représente schématiquement, sous la forme d'un schéma-bloc, des opérations effectuées par un filtre de navigation du système de localisation de la figure 1,
- la figure 4 représente schématiquement l'organisation de différents filtres de navigation du système de localisation de la figure 1, les uns par rapport aux autres,
- la figure 5 représente schématiquement l'évolution au cours du temps de différentes estimations d'un paramètre de positionnement du système de positionnement de la figure 1, déterminées au moyen des filtres de navigation de ce système,
- la figure 6 représente schématiquement l'évolution au cours du temps des d'écarts types des différentes estimations du paramètre de positionnement représentées sur la figure 5,
- les figures 7 et 8 sont des vues de détail, agrandies, des figures 5 et 6,
- la figure 9 représente schématiquement l'évolution au cours du temps d'écarts-types, déterminées par un module de détection d'erreur du système de positionnement,
- la figure 10 est une vue de détail, agrandie, d'une partie de la figure 9.

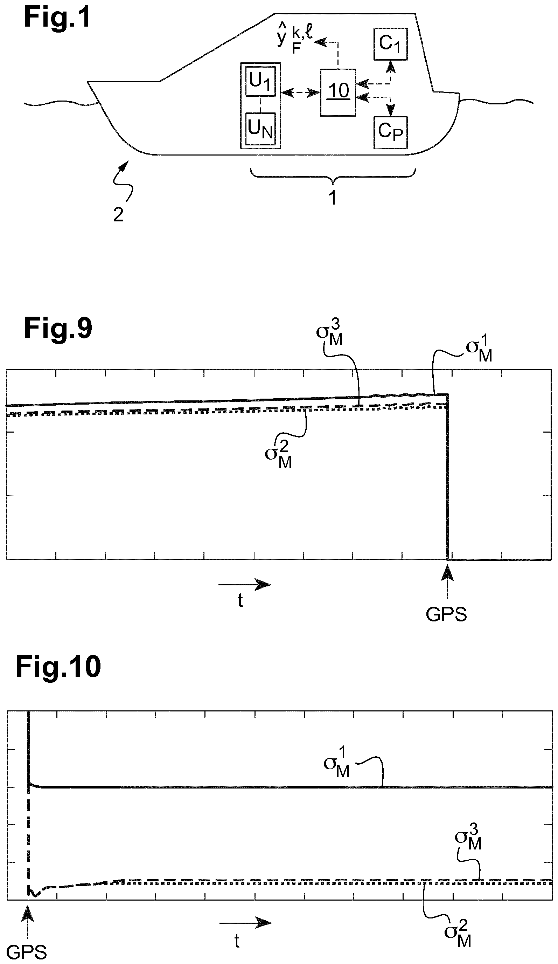

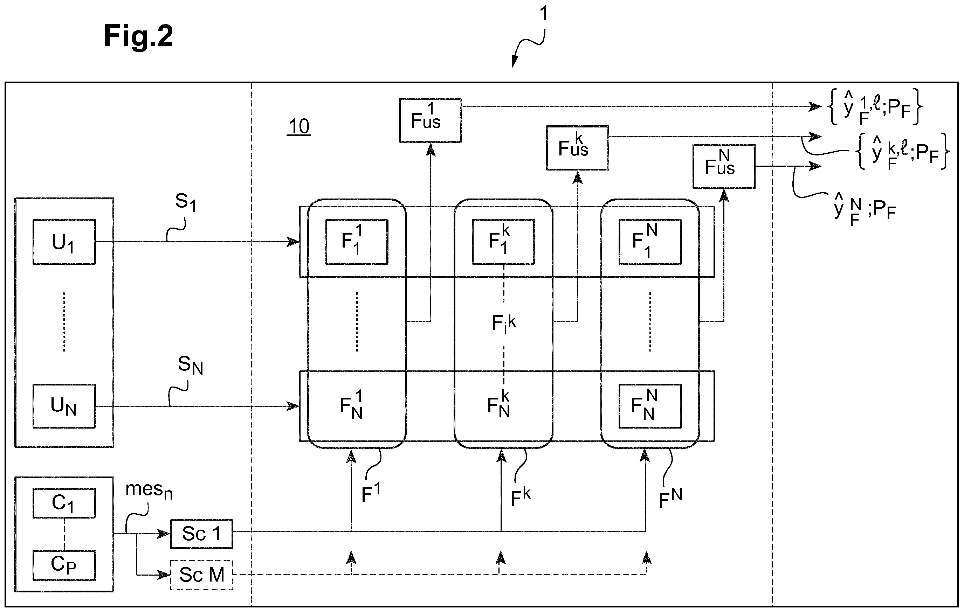

La figure 1 représente schématiquement un navire 2 muni d'un système de localisation, 1, conforme aux enseignements de l'invention.
Ce système 1, dont les principaux éléments sont représentés sur la figure 2, peut également équiper avantageusement un sous-marin, un véhicule terrestre tel qu'un véhicule automobile, un aéronef, ou encore un dispositif destiné à être utilisé dans l'espace extra-atmosphérique.
Le système 1 de localisation comprend une plateforme inertielle, qui comprend elle-même plusieurs unités de mesure inertielle $U_1$, $U_2$, ... $U_i$, ..., $U_N$, au nombre de N.
Il comprend également :

- au moins un capteur commun C1, ..., Cp, tel qu'un système de positionnement GPS, chacun de ces capteurs étant configuré pour délivrer une mesure d'au moins un paramètre de positionnement du système 1, et
- une unité de traitement 10 électronique.

L'unité de traitement 10 comprend plusieurs filtres de navigation $F_1{}^1$, ..., $F_i{}^K$, ..., $F_N{}^N$, associés respectivement aux différentes unités de mesure inertielle $U_1$, ..., $U_i$, ..., $U_N$ (figure 2).
Chaque filtre de navigation $F_i{}^k$ a une structure proche de celle d'un filtre de Kalman. Ce filtre $F_i{}^k$ détermine une première estimation $\hat{y}^{k,i}$ d'un vecteur d'état y du système 1 (certaines composantes de ce vecteur d'état sont des paramètres de positionnement du système), sur la base des signaux délivrés par l'unité de mesure inertielle $U_i$ à laquelle ce filtre est associé. Le filtre de navigation $F_i{}^k$ recale ensuite cette première estimation, sur la base des mesures des paramètres de positionnement du système délivrées par les capteurs communs C1, ..., Cp.

Une même mesure de l'un des paramètres de positionnement du système, délivrée par l'un des capteurs communs, est donc employée par plusieurs filtres de navigation individuels (cette mesure est en quelque sorte partagée entre ces filtres de navigation) C'est pourquoi ces capteurs sont appelés capteurs communs. Au contraire, les signaux délivrés par l'une des unités de mesure inertielle sont adressés spécifiquement à l'un des filtres de navigation individuel (ou tout au plus à un sous-groupe de filtres de navigation individuels).

Les différents composants du système 1, et la structure d'ensemble de l'unité de traitement 10 peuvent maintenant être décrits plus en détail.

Unités de mesure inertielle

Les unités de mesure inertielle $U_1$, $U_2$, ... $U_i$, ..., $U_N$ sont rigidement liées les unes aux autres. Ici, elles sont en outre liées rigidement à la structure du navire 2 (par exemple à la charpente du navire).

Chaque unité de mesure inertielle $U_i$ comprend trois accéléromètres et trois gyromètres (ou, autrement formulé, un accéléromètre tri-axe et un gyromètre tri-axe).

Chaque accéléromètre délivre un signal d'accélération représentatif de l'accélération subie par l'unité de mesure inertielle qu'il équipe, selon un axe donné (lié à cette unité de mesure inertielle).

Chaque gyromètre délivre un signal de vitesse angulaire, représentatif d'une vitesse angulaire de rotation de l'unité de mesure qu'il équipe autour d'un axe donné (lié à l'unité de mesure inertielle).

Ces signaux d'accélérations et de vitesses angulaires constituent autant de signaux inertiels, renseignant sur la dynamique de cette unité de mesure inertielle $U_i$.

Les signaux d'accélération et de vitesse angulaire délivrés par les accéléromètres et gyromètres équipant l'une quelconque des unités de mesure inertielle $U_1$, $U_2$, ... $U_i$, ..., $U_N$ permettent de déterminer entièrement les trois composantes du vecteur accélération de cette unité de mesure inertielle, ainsi que les trois composantes du vecteur de vitesse angulaire de cette unité de mesure.

Chaque signal d'accélération, et chaque signal de vitesse angulaire :

- présente un biais (c'est-à-dire une erreur systématique, due par exemple à une légère erreur de calibration ; en pratique, ce biais peut être très faible), et
- est affecté d'un bruit stochastique (erreur aléatoire), blanc gaussien.

Les performances des différentes unités de mesure inertielle $U_1$, $U_2$, ... $U_i$, ..., $U_N$, en termes de rapport signal sur bruit, sont proches les unes des autres.

Plus précisément, un écart relatif entre les rapports signal sur bruit respectifs de deux des signaux d'accélération, délivrés respectivement par deux quelconques desdites unités de mesure $U_1$, $U_2$, ... $U_i$, ..., $U_N$, est ici inférieur à 30 %, voire même inférieur à 3%.

Les biais que présentent respectivement ces deux signaux d'accélération ont alors des variances qui ne diffèrent l'une à l'autre que de 30% au plus, voire de 3% au plus. De même, les bruits blancs qui affectent respectivement ces deux signaux d'accélération ont des variances qui ne diffèrent l'une à l'autre que de 30% au plus, voire de 3% au plus.

De la même manière, un écart relatif entre les rapports signal sur bruit respectifs de deux des signaux de vitesse angulaire, délivrés respectivement par deux quelconques desdites unités de mesure $U_1$, $U_2$, ... $U_i$, ..., $U_N$, est ici inférieur à 30 %, voire même inférieur à 3%. Ainsi, les biais que présentent respectivement ces deux signaux de vitesses angulaires ont des variances qui ne diffèrent l'une à l'autre que de 30% au plus, voire de 3% au plus, et les bruits blancs qui affectent respectivement ces deux signaux ont des variances qui ne diffèrent l'une à l'autre que de 30% au plus, voire de 3% au plus.

En l'occurrence, dans le mode de réalisation décrit ici :

- les variances des biais que présentent les signaux d'accélération, délivrés respectivement par les unités de mesure $U_1$, $U_2$, ... $U_i$, ..., $U_N$, sont égales deux à deux; chacune de ces variances est notée $p°_{a\_UMI}$ dans la suite ;
- les variances des bruits blancs que présentent ces signaux d'accélération sont aussi égales deux à deux ; chacune de ces variances est notée $q_{a\_UMI}$ ;
- les variances des biais que présentent les signaux de vitesse angulaire délivrés par les unités mesure inertielle sont égales deux à deux; chacune de ces variances est notée $p°_{g\_UMI}$ dans la suite ; et
- les variances des bruits blancs que présentent ces signaux de vitesse angulaire sont aussi égales deux à deux; chacune de ces variances est notée $q_{g\_UMI}$ dans la suite.

Les valeurs suivantes de ces variances sont données à titre d'exemple :

$$p^{o}_{a\_UMI} = (30\ \mu g)^2$$

(soit 30 micro-g au carré, où g est la valeur moyenne de l'accélération de la pesanteur, égale à 9,8 mètres par seconde carrée 1 micro-g étant égal à $10^{-6}$.g)

$$q_{a\_UMI} = (5\mu g/\sqrt{Hz})^2$$

(soit 5 micro g par racine de Hertz, le tout au carré)

$$p^{o}_{g\_UMI} = (5\ mdeg/h)^2$$

(soit 5 millidegrés par heure, le tout au carré), et

$$q_{g\_UMI} = (5\ mdeg /\sqrt{h})^2$$

(soit 5 millidegrés par racine d'heure, le tout au carré).

Capteurs communs

Dans le mode de réalisation décrit ici, l'un au moins des capteurs communs comprend un système de positionnement par signaux radio, en l'occurrence de type GPS. Ce système de positionnement GPS délivre un ensemble de mesures représentatives respectivement :

- d'une longitude,
- d'une latitude, et
- d'une altitude

repérant le système 1 de localisation dans le référentiel terrestre.

En complément, le système de positionnement GPS pourrait aussi délivrer des mesures représentatives d'un angle de cap, d'un angle de roulis et/ou d'un angle de tangage du système 1 de localisation, par rapport au référentiel terrestre.

Le système 1 de localisation peut aussi comprendre d'autres capteurs communs, réalisés par exemple au moyen :

- d'un loch, par exemple un loch électromagnétique,
- d'un altimètre ou d'un profondimètre,
- d'un système de positionnement par signaux acoustiques,
- d'un ensemble de capteurs de champ magnétique ayant une fonction de boussole,
- ou encore d'un odomètre.

Pour chacun de ces capteurs, le ou les paramètres de positionnement mesurés peuvent comprendre une ou plusieurs des grandeurs suivantes :

- une longitude, une latitude, ou une altitude repérant le système de localisation,
- une composante de la vitesse du système de localisation par rapport au référentiel terrestre,
- un angle de cap, un angle de roulis ou un angle de tangage du système de localisation, par rapport au référentiel terrestre.

La mesure délivrée par l'un quelconque des capteurs communs peut aussi être représentative d'un écart entre, d'une part, l'une des grandeurs mentionnées ci-dessus, et, d'autre part, une valeur de cette grandeur évaluée par ailleurs (par exemple évaluée par intégration de l'un des signaux inertiels).

Comme cela apparaîtra par la suite, la mesure délivrée par l'un des capteurs communs peut aussi être représentative, indirectement, de l'une des grandeurs suivantes :

- un biais de l'un des accéléromètres ou de l'un des gyromètres,
- une anomalie de gravité,
- une vitesse d'un courant marin,
- un paramètre de calibration dudit capteur commun.

Les mesures délivrées par les capteurs communs sont affectées chacune par un bruit de mesure.

Les bruits de mesure affectent respectivement les mesures de longitude, de latitude et d'altitude délivrées par le système de positionnement GPS présentent ici des variances proches, et même égales deux à deux. Chacun de ces bruits de mesure comprend une composante de bruit blanc gaussien, et une composante de bruit corrélée temporellement. La variance du bruit de mesure blanc est notée $r\_{GPS}$, et celle du bruit de mesure corrélé temporellement est notée $q\_{GPS}$.

Les valeurs suivantes de ces variances sont données à titre d'exemple :

$$r\_{GPS} = (10 \text{ mètres})^2$$

$$q\_{GPS} = (5 \text{ mètres})^2 . \, 2\Delta t / \tau_{GPS}$$

où $\Delta t$ est un pas de temps, et où $\tau_{GPS}$ est un temps de corrélation du bruit de mesure corrélé temporellement.

Il est noté qu'un bruit corrélé temporellement est un bruit qui affecte une variable X de la façon suivante : sous l'influence de ce bruit corrélé, la variable X suit l'équation suivante : $$\dot{X} = -\frac{1}{\tau}X + \sigma\sqrt{\frac{2}{\tau}} \, b \quad ,$$ où $\tau$ est le temps de corrélation de ce bruit, $\sigma$ est un écart-type, et $b$ un bruit blanc gaussien de variance unité.

## Structure d'ensemble de l'unité de traitement électronique

L'unité de traitement 10 électronique comprend au moins un processeur, une mémoire, des entrées adaptées pour acquérir les signaux délivrés par les unités de mesure inertielle, et des entrées pour acquérir les mesures délivrées par les capteurs communs.

Comme on peut le voir sur la figure 2, l'unité de traitement 10 électronique comprend plusieurs modules, dont les filtres de navigation $F_1^1$, ..., $F_i^k$, ..., $F_N^N$ mentionnés plus haut, et des modules de fusion $F_{us}^1$, ..., $F_{us}^k$, ..., $F_{us}^N$.

Chaque module de l'unité de traitement 10 peut être réalisé au moyen d'un ensemble de composants électroniques dédiés et/ou au moyen d'un ensemble d'instructions stockées dans la mémoire (ou dans l'une des mémoires) de l'unité de traitement 10. L'unité de traitement 10 peut être réalisée sous la forme d'un ensemble électronique distinct des unités de mesure inertielle et externe à celles-ci. Elle peut aussi être réalisée sous la forme de plusieurs circuits électroniques, ou comprendre plusieurs groupes d'instructions, dont certains peuvent être intégrés aux unités de mesure inertielle elles-mêmes.

## Filtres de navigation « k-fusionnables »

Chaque filtre de navigation $F_i^k$ :

- reçoit en entrée les signaux d'accélération et de vitesse angulaire, notés $S_i$, délivrés par l'unité de mesure inertielle $U_i$ à laquelle il est associé, et

- détermine, à partir de ces signaux notamment, une estimation corrigée $\hat{y}_{cor}^{k,i}$ du vecteur d'état y du système.

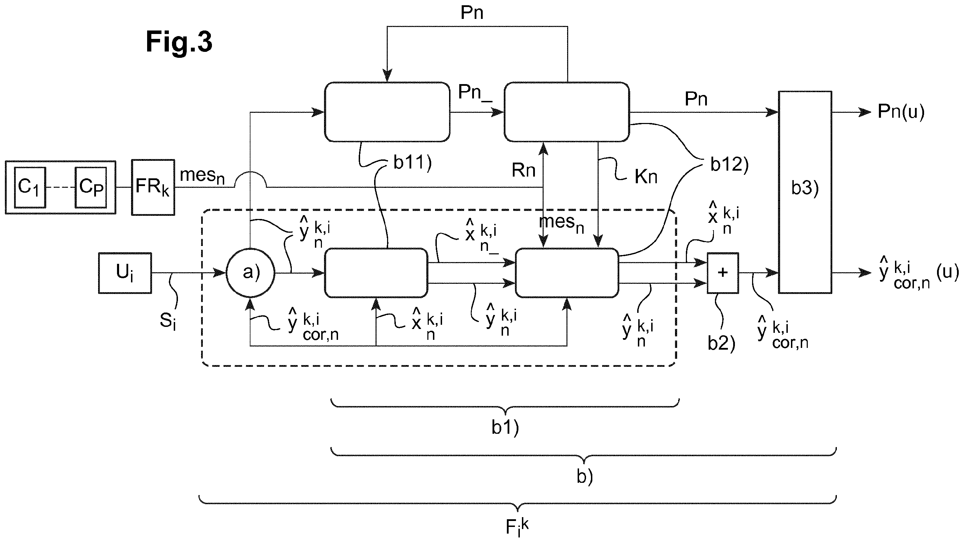

Comme cela sera expliqué en détail plus bas (en référence à la figure 3), le vecteur d'état y comprend notamment des paramètres de positionnement du système 1 (position, vitesse et attitude du système par rapport au référentiel terrestre).

Les estimations corrigées $\hat{y}_{cor}^{k,i}$ , ..., $\hat{y}_{cor}^{N,N}$ déterminées par les filtres de navigation $F_i^k$, ..., $F_N^N$ ($k \neq 1$) sont destinées à être fusionnées, c'est-à-dire moyennées ensemble, au moyen des filtres de fusion $F_{us}^k$, ..., $F_{us}^N$, pour

obtenir différentes estimations moyennes $\hat{y}_F^{k,l}$ du vecteur d'état y du système.

La donnée conjointe de l'une de ces estimations moyennes $\hat{y}_F^{k,l}$, et d'une matrice de covariance des erreurs affectant cette estimation, est parfois appelée « solution de navigation » dans la littérature spécialisée.

Chaque estimation moyenne $\hat{y}_F^{k,l}$ comprend plusieurs composantes, dont certaines sont des estimations moyennes des paramètres de positionnement du système. D'autres composantes de l'estimation moyenne $\hat{y}_F^{k,l}$ correspondent à des estimations de paramètres environnementaux (variation de la valeur de la gravité, courant marin), ou à des estimations de paramètres de fonctionnement des capteurs communs ou des unités de mesure inertielle (biais des unités de mesure inertielle par exemple).

Toutefois, une partie des filtres de navigation, notés $F_1^1$, ..., $F_i^1$, ..., $F_N^1$, sont réalisés au moyen de filtres de Kalman conventionnels, individuels, qui délivrent des sorties qui ne sont pas destinées à être fusionnées. Chacun de ces filtres, $F_1^1$, ..., $F_i^1$, ..., $F_N^1$, est configuré pour délivrer une estimation corrigée $\hat{y}_{cor}^{1,i}$, qui, en elle-même, en l'absence de fusion ultérieure, correspond à la meilleure estimation du vecteur d'état y pouvant être obtenue sur la base des signaux $S_i$ délivrés par l'unité de mesure inertielle Ui et des mesures délivrées par les capteurs communs ( $\hat{y}_{cor}^{1,i}$ est une estimation optimale en l'absence de fusion ultérieure), ou tout au moins qui est proche d'une telle estimation optimale du vecteur d'état y. Pour cette raison, les filtres $F_1^1$, ..., $F_i^1$, ..., $F_N^1$ sont appelées filtres « 1-fusionnables » dans la suite.

Les autres filtres de navigation $F_i^k$, ..., $F_N^N$ (k ≠ 1) sont configurés spécifiquement pour que les estimations corrigées $\hat{y}_{cor}^{k,i}$ qu'ils délivrent soit bien adaptées pour être fusionnées ensemble.

Plus précisément, chaque filtre de navigation $F_i^k$ est configuré pour que l'estimation corrigée $\hat{y}_{cor}^{k,i}$ du vecteur d'état y qu'il délivre conduise, une fois fusionnée avec un nombre déterminé k-1 de telles estimations (choisies parmi les estimations corrigées $\hat{y}_{cor}^{k,1}$, ..., $\hat{y}_{cor}^{k,i}$, ..., $\hat{y}_{cor}^{k,N}$), à une estimation moyenne $\hat{y}_F^{k,l}$ du vecteur d'état y qui soit plus précise que ce qui serait obtenu en fusionnant un nombre k d'estimations corrigées délivrées par des filtres de Kalman conventionnels individuels, tels que les filtres de navigation $F_1^1$, ..., $F_i^1$, ..., $F_N^1$ décrits plus haut.

De préférence, le filtre de navigation $F_i^k$ est même configuré pour que l'estimation moyenne $\hat{y}_F^{k,l}$ du vecteur d'état y du système, obtenue par fusion de l'estimation corrigée $\hat{y}_{cor}^{k,i}$ avec un nombre k-1 de telles estimations, soit une estimation optimale du vecteur d'état du système. La configuration du filtre de navigation $F_i^k$, qui permet que l'estimation moyenne $\hat{y}_F^{k,l}$ (fusionnée) soit optimale, est décrite plus en détail plus bas en référence à la figure 3. Elle est basée sur une technique d'augmentation de variance.

Puisque les filtres $F_1^k$, ..., $F_i^k$, ..., $F_N^k$ délivrent ainsi des estimations corrigées $\hat{y}_{cor}^{k,1}$, ..., $\hat{y}_{cor}^{k,i}$, ..., $\hat{y}_{cor}^{k,N}$ destinées à être fusionnées ensemble par groupes de k estimations, ils sont appelés dans la suite filtres « k-fusionnables ».

Module de fusion

Le module de fusion $F_{us}^k$ est associé à l'ensemble $F^k$ des filtres de navigation $F_1^k$, ..., $F_i^k$, ..., $F_N^k$ « k-fusionnables » (figure 2).

Le module de fusion $F_{us}^k$ reçoit en entrée les N estimations corrigées $\hat{y}_{cor}^{k,1}$, ..., $\hat{y}_{cor}^{k,i}$, ..., $\hat{y}_{cor}^{k,N}$ délivrées par ces filtres de navigation, et délivre, en sortie, une ou plusieurs estimations moyennes $\hat{y}_F^{k,l}$ du vecteur d'état y.

Chaque estimation moyenne $\hat{y}_F^{k,l}$ est égale à la moyenne arithmétique, pondérée ou non, d'un ensemble de k estimations corrigées, choisies parmi les N estimations corrigées « k-fusionnables » $\hat{y}_{cor}^{k,1}$ , ..., $\hat{y}_{cor}^{k,i}$, ..., $\hat{y}_{cor}^{k,N}$.

Plusieurs combinaisons de k estimations choisies parmi N estimations sont envisageables (sauf pour k=N). En effet, le nombre d'ensembles distincts, qui comprennent chacun k estimations corrigées choisies parmi les N estimations corrigées $\hat{y}_{cor}^{k,1}$ , ..., $\hat{y}_{cor}^{k,i}$, ..., $\hat{y}_{cor}^{k,N}$, $C_N^k = \dfrac{N!}{k!\,(N-k)!}$ est égal à (où la quantité $N!$ est la factorielle de N).

Dans le mode de réalisation décrit ici, le module de fusion $F_{us}^k$ est configuré pour déterminer une estimation moyenne du vecteur d'état y, pour chacun de ces ensembles de k estimations corrigées.

Le nombre d'estimations moyennes $\hat{y}_F^{k,l}$ (avec l compris entre 1 et $C_N^k$ ), déterminées par module de fusion $F_{us}^k$, est donc égal à $C_N^k$.

Par exemple, si les unités de mesure inertielle sont au nombre de 3 (N=3), le module de fusion $F_{us}^2$, qui est dédié aux filtres de navigation « 2-fusionnables », détermine $C_3^2 = 3$ estimations moyennes du vecteur d'état y, distinctes, en fusionnant respectivement :

- l'estimation corrigée $\hat{y}_{cor}^{2,1}$ (estimation « 2-fusionnable » issue de l'unité de mesure inertielle $U_1$) avec l'estimation corrigée $\hat{y}_{cor}^{2,2}$ (estimation « 2-fusionnable » issue de l'unité de mesure inertielle $U_2$),

- l'estimation corrigée $\hat{y}_{cor}^{2,1}$ avec l'estimation corrigée $\hat{y}_{cor}^{2,3}$ (estimation « 2-fusionnable » issue de l'unité de mesure inertielle $U_3$), et

- l'estimation corrigée $\hat{y}_{cor}^{2,2}$ avec l'estimation corrigée $\hat{y}_{cor}^{2,3}$.

Ainsi, chaque module de fusion détermine plusieurs estimations moyennes distinctes du vecteur d'état y, à l'exception du module de fusion $F_{us}^N$ qui détermine une seule estimation moyenne, égale à la moyenne des N estimations corrigées « N-fusionnables ».

On rappelle par ailleurs que chaque estimation corrigée $\hat{y}_{cor}^{k,i}$ est issue des signaux produits par l'unité de mesure inertielle $U_i$ à laquelle est associé le filtre de navigation $F_i^k$.

Chaque estimation moyenne $\hat{y}_F^{k,l}$ déterminée par le module de fusion $F_{us}^k$ est donc obtenue à partir des signaux produits par un sous-ensemble donné de k unités de mesure inertielle, choisies parmi les N unités de mesure inertielle $U_1$, ..., $U_i$, ... , $U_N$.

Multi-estimation par l'unité de traitement

Comme on vient de voir, l'unité de traitement 10 est configurée pour déterminer plusieurs estimations moyennes $\hat{y}_F^{k,l}$ du vecteur d'état $y$, distinctes, obtenues à partir des signaux délivrés respectivement par différents sous-groupes d'unités de mesure inertielle (choisies parmi les N unités de mesure inertielle du système 1).

Disposer de ces différentes estimations moyennes $\hat{y}_F^{k,l}$ permet avantageusement de détecter un dysfonctionnement éventuel de l'une des unités de mesure inertielle.

En outre, cela rend le système particulièrement robuste vis-à-vis d'une défaillance éventuelle de l'une (ou de plusieurs) des unités de mesure inertielle. Si une telle défaillance se produit, les estimations moyennes $\hat{y}_F^{k,l}$ obtenues à partir des signaux délivrés par l'unité de mesure défaillante sont écartées, tandis que les autres estimations moyennes

$\hat{y}_F^{k,l}$ continuent d'être utilisables et ne sont pas dégradées par la défaillance en question.

Le nombre de sous-groupes distincts d'unités de mesure inertielle, choisies parmi les N unités de mesure inertielle du système 1, est égal à $\sum_{k=1}^{k=N} C_N^k = 2^N - 1.$

Dans le mode de réalisation décrit ici, l'unité de traitement 10 détermine une estimation moyenne $(\hat{y}_F^{k,l})$ du vecteur d'état $y$ pour chacun de ces sous-groupes. L'unité de traitement détermine donc $2^N - 1$ estimations moyennes $\hat{y}_F^{k,l}$, distinctes, du vecteur d'état du système. Ces $2^N - 1$ estimations moyennes sont obtenues au moyen de seulement $N^2$ filtres de navigation individuels, qui opèrent indépendamment les uns des autres.

A titre de comparaison, dans un système où les signaux délivrés par les unités de mesure inertielle sont tout d'abord fusionnés entre eux, et où le résultat de chacune de ces fusions est ensuite filtré par un filtre de navigation, $2^N - 1$ filtres de navigations distincts sont nécessaires (au lieu de $N^2$), pour obtenir $2^N - 1$ estimations moyennes distinctes du vecteur d'état du système.

De manière comparable, dans un système employant des filtres de navigation individuels (locaux) avec réinjection de l'une des estimations moyennes en entrée des filtres, $2^N - 1$ filtres de navigations distincts seraient nécessaires pour obtenir $2^N - 1$ estimations moyennes distinctes du vecteur d'état du système.

La présente solution, dans laquelle les signaux délivrés par les différentes unités de mesure inertielle sont filtrés localement (c'est-à-dire individuellement) et sans réinjection, requiert donc nettement moins de ressources de calcul que les autres solutions mentionnées ci-dessus (tout au moins lorsque le nombre N d'unités de mesure inertielle est élevé, supérieur ou égal à 5, puisque $N^2$ est alors inférieur à $2^N - 1$). En outre, cette architecture autorise une détection efficace d'un disfonctionnement éventuel de l'une des unités de mesure inertielle (comme expliqué plus bas lors de la présentation du module de détection d'erreur).

Structure du filtre de navigation $F_i^k$

La structure de chacun des filtres de navigation $F_1^1$, ..., $F_i^k$, ..., $F_N^N$ peut maintenant être décrite plus en détail, en référence à la figure 3.

Les grandeurs estimées grâce au filtre de navigation $F_i^k$, sont décrites dans un premier temps. Les opérations exécutées par le filtre, et la structure des bruits qu'il prend en compte sont décrits ensuite.

Dans le mode de réalisation décrit ici, le vecteur d'état $y$, dont l'estimation corrigée $\hat{y}_{cor}^{k,i}$ est déterminée par le filtre de navigation $F_i^k$, comprend :

- les paramètres de positionnement du système (position, vitesse, attitude), par exemple regroupés sous la forme d'un vecteur de positionnement $y_P$,
- des paramètres externes à l'unité de mesure inertielle Ui, notés $y_E$, et
- des paramètres de fonctionnement de l'unité de mesure inertielle $U_i$, notés $y_{Ui}$.

Le vecteur de positionnement $y_P$ comprend ici les 9 composantes suivantes, qui repèrent le système de localisation dans le référentiel terrestre :

- une longitude,
- une latitude,
- une altitude,
- une composante de la vitesse du système selon l'axe local Sud-Nord,
- une composante de cette vitesse selon l'axe local Est-Ouest,
- une composante de cette vitesse selon l'axe vertical local (c'est-à-dire selon l'axe vertical du lieu où se situe le système de localisation),
- un angle de cap,
- un angle de roulis, et
- un angle de tangage.

Les paramètres externes $y_E$ comprennent ici :

- un ou plusieurs paramètres relatifs à l'environnement de l'unité de mesure inertielle $U_i$, et
- un ou plusieurs paramètres relatifs au fonctionnement du ou des capteurs communs C1, ... $C_P$.

Plus précisément, les paramètres externes $y_E$ comprennent ici les 4 paramètres scalaires suivant :

- un bruit d'anomalie de gravité, corrélé spatialement, lié à la méconnaissance de la valeur exacte que présente la gravité au point où se situe le système, et
- les 3 composantes de bruit corrélées temporellement qui affectent les mesures de longitude, latitude et altitude délivrées par le système de positionnement GPS (ces composantes ont été décrites plus haut).

Il est noté qu'un bruit corrélé spatialement est un bruit qui affecte une variable X de la façon suivante : sous l'influence de ce bruit corrélé, la variable X suit l'équation suivante : $\dot{X} = -\frac{v}{L}X + \sigma\sqrt{\frac{2v}{L}}\ b$ , où L est la longueur de corrélation de ce bruit, $v$ une vitesse de déplacement, $\sigma$ un écart-type, et $b$ un bruit blanc gaussien de variance unité.

Quant aux paramètres de fonctionnement $y_{Ui}$ de l'unité de mesure inertielle $U_i$, ils comprennent ici :

- 3 composantes scalaires représentatives respectivement des biais des 3 accéléromètres de l'unité de mesure inertielle $U_i$, et
- 3 composantes scalaires représentatives respectivement des biais des 3 gyromètres de l'unité de mesure inertielle $U_i$.

Le vecteur d'état $y$ considéré ici comprend ainsi 19 composantes scalaires.

Chaque filtre de navigation $F_i^k$ est configuré pour :

a) déterminer une première estimation $\hat{y}^{k,i}$ du vecteur d'état $y$, par intégration temporelle des signaux d'accélération et de vitesse angulaire $S_i$ délivrés par l'unité de mesure inertielle $U_i$, puis pour

b) déterminer l'estimation corrigée $\hat{y}_{cor}^{k,i}$ du vecteur d'état $y$ du système, en recalant la première estimation $\hat{y}^{k,i}$ du vecteur d'état $y$ sur la base des mesures $mes_n$ délivrées par les capteurs communs C1, ... Cp,

le filtre exécutant les étapes a) et b) plusieurs fois successivement.

Les étapes a) et b) sont exécutées à chaque pas de calcul.

Au pas de calcul numéro n, lors de l'étape a), le filtre de navigation détermine la première estimation $\hat{y}_n^{k,i}$ du vecteur d'état $y$, en fonction des signaux d'accélération et de vitesse angulaire $S_i$ délivrés par l'unité de mesure inertielle $U_i$, et en fonction de la première estimation $\hat{y}_{n-1}^{k,i}$ du vecteur d'état $y$ au pas de calcul précédent (n-1) et/ou en fonction de l'estimation corrigée $\hat{y}_{cor,n-1}^{k,i}$ du vecteur d'état y au pas de calcul précédent.

Dans le mode de réalisation décrit ici, l'étape b) comprend les étapes suivantes :

b1) déterminer une erreur estimée $\hat{x}^{k,i}$, représentative d'un écart entre le vecteur d'état y et la première estimation $\hat{y}^{k,i}$ de ce vecteur d'état, l'erreur estimée étant déterminée en fonction notamment des mesures délivrées par les capteurs communs C1, ..., Cp, puis

b2) déterminer l'estimation corrigée $\hat{y}_{cor}^{k,i}$ du vecteur d'état y en sommant la première estimation $\hat{y}^{k,i}$ de ce vecteur d'état y avec l'erreur estimée $\hat{x}^{k,i}$ : $\hat{y}_{cor}^{k,i} = \hat{x}^{k,i} + \hat{y}^{k,i}$ .

L'erreur estimée $\hat{x}^{k,i}$ est une estimation de l'écart x entre le vecteur d'état y et la première estimation $\hat{y}^{k,i}$ de ce vecteur : $x = y - \hat{y}^{k,i}$ . Dans la suite, l'écart x est appelé vecteur d'erreur.

L'erreur estimée $\hat{x}^{k,i}$ est déterminée, à l'étape b1), par un processus de correction itératif décrit ci-dessous. Le filtre de navigation $F^k_i$ est donc configuré pour estimer, de manière itérative, l'erreur que présente le signal de position $(\hat{y}^{k,i})$ déduit des signaux d'accélération et de vitesse angulaire $S_i$.

En variante, le filtre de navigation pourrait être réalisé au moyen d'un filtre de Kalman (modifié) qui, au lieu de déterminer la grandeur intermédiaire que constitue l'erreur estimée $\hat{x}^{k,i}$, estimerait directement le vecteur d'état y, à partir des signaux d'accélération et de vitesse angulaire $S_i$ et des mesures délivrées par les capteurs communs.

Au cours des exécutions successives de l'étape b1), le filtre de navigation $F_i^k$ détermine de proche en proche, de manière itérative, l'erreur estimée $\hat{x}_n^{k,i}$ au pas de calcul n, ainsi qu'une estimation $P_n^{k,i}$ de la matrice de covariance du vecteur d'erreur x.

Cette détermination de proche en proche est réalisée en partant d'une estimation initiale du vecteur d'erreur, notée $\hat{x}_o^{k,i}$, et d'une estimation initiale de la matrice de covariance du vecteur d'erreur, notée $P_0^{k,i}$ (cette variance étant préalablement augmentée, comme expliqué plus bas).

Cette détermination de proche en proche est réalisée en exécutant, à chaque répétition de l'étape b1) :

- une étape b11), de propagation de l'erreur estimée (appelée parfois étape de prédiction), puis
- une étape b12), de mise à jour de cette erreur (appelée parfois étape de recalage), au cours de laquelle l'erreur estimée est recalée sur la base des mesures délivrées par les capteurs communs C1, ..., Cp.

Le filtre de navigation $F^k_i$ exécute les étapes de propagation et de mise à jour à chaque pas de calcul.

L'évolution temporelle du vecteur d'erreur *x*, due notamment au déplacement du système, est prise en compte lors de l'étape de propagation. Cette évolution temporelle est régie par l'équation d'évolution suivante (qui modélise notamment la dynamique de déplacement du système 1) :

$$x_n^i = F_n \, x_{n-1}^i + v_n^s + v_n^e$$

où l'indice n est le numéro du pas de calcul considéré, où $F_n$ s'obtient par linéarisation de l'équation d'évolution non linéaire de $y^i$ au voisinage du vecteur d'état $y_n^i$ et où les processus $v^s = \{v_n^s\}_{n \in \mathbb{N}}$ et $v^e = \{v_n^e\}_{n \in \mathbb{N}}$ sont des bruits blancs gaussiens (vectoriels), appelés bruits de propagation spécifique et externe respectivement. Le processus $v^s$ représente le bruit affectant le signal délivré par l'unité de mesure inertielle associée au filtre de navigation considéré, spécifique à cette unité de mesure inertielle. Le processus $v^e$ représente le bruit d'origine externe à ladite unité de mesure inertielle, et qui est indépendant de l'unité de mesure inertielle considérée.

Lors de l'exécution numéro *n* de l'étape de propagation (n supérieur ou égal à 1), le filtre de navigation $F_i^k$ effectue les opérations de calcul suivantes :

$$\hat{x}_{n_-}^{k,i} = F_n \, \hat{x}_{n-1}^{k,i} \,,$$

et

$$P_{n_-}^{k,i} = F_n P_{n-1}^{k,i} F_n^T + Q_n^s + Q_{n,aug}^e \,,$$

où $Q_n^s$ est la matrice de covariance du bruit de propagation spécifique $v_n^s$ et $Q_{n,aug}^e$ est une matrice de covariance augmentée.

La matrice de covariance augmentée $Q_{n,aug}^e$ est déterminée en fonction de la matrice de covariance $Q_n^e$ du bruit de propagation externe $v_n^e$. De manière particulièrement remarquable, la matrice de covariance augmentée $Q_{n,aug}^e$ est supérieure à la matrice de covariance $Q_n^e$ des bruits de propagation externes ($\forall x \in \mathbb{R}^d$, $x^T Q_{n,aug}^e x > x^T Q_n^e x$). Ici, la matrice de covariance augmentée $Q_{n,aug}^e$ est proportionnelle à la matrice de covariance $Q_n^e$. Plus précisément la matrice de covariance $Q_{n,aug}^e$ est ici égale à la matrice de covariance $Q_n^e$ du bruit de propagation externe, multipliée par le nombre k : $Q_{n,aug}^e = k \, Q_n^e$.

La prise en compte des mesures délivrées par les capteurs communs, lors de l'étape de mise à jour, est décrite maintenant.

Comme déjà indiqué, les capteurs communs délivrent des mesures représentatives d'une ou plusieurs composantes du vecteur d'état y, affectées d'un bruit de mesure. L'ensemble des mesures délivrées par les capteurs communs, noté $mes_n$, est relié au vecteur d'état y par une matrice de mesure $H_n$, sous la forme suivante :

$$mes_n = H_n \, y_n^i + w_n$$

où le processus $w = \{w_n\}_{n \in \mathbb{N}}$ est un bruit blanc gaussien (vectoriel), dont les différentes composantes comprennent les bruits de mesure mentionnés plus haut. Quant à la matrice de mesure $H_n$, ses composantes correspondent en quelque sorte aux gains de mesure respectifs des capteurs communs.

Ici, l'ensemble des mesures délivrées par les capteurs communs, $mes_n$, est pris en compte par le filtre de navigation $F_i^k$ sous une forme modifiée $z_n$, de manière à être représentatives du vecteur d'erreur x, au lieu du vecteur d'état y. Cet ensemble de mesures modifiées $z_n$ est déduit des mesures $mes_n$ conformément à la formule suivante :

$$z_n = mes_n - H_n \, \hat{y}_n^{k,i}.$$

L'ensemble des mesures modifiées $z_n$ est donc relié lui aussi au vecteur d'erreur x par la matrice de mesure $H_n$ mentionnée ci-dessus, selon l'équation suivante :

$$z_n = H_n \, x_n^i + w_n \ .$$

Lors de l'exécution numéro n de l'étape de mise à jour, le filtre de navigation effectue les opérations de calcul suivantes :

$$\hat{x}_n^{k,i} = \hat{x}_{n_-}^{k,i} + K_n \big( z_n - H_n \, \hat{x}_{n_-}^{k,i} \big),$$

et

$$P_n^{k,i} = (Id - K_n H_n) P_{n_-}^{k,i},$$

où *Id* est une matrice identité.

Il est noté que le terme correctif $K_n \big( z_n - H_n \, \hat{x}_{n_-}^{k,i} \big)$ pourrait aussi s'exprimer sous la forme suivante :

$$K_n \big( mes_n - H_n \big[ \hat{y}_n^{k,i} + \hat{x}_{n_-}^{k,i} \big] \big).$$

Le gain de correction $K_n$, qui permet de recaller l'estimation $\hat{x}_{n_-}^{k,i}$ en fonction des mesures $mes_n$, est parfois appelé gain de Kalman. De préférence, il est déterminé de manière à présenter, avec un gain optimal $K_{n, opt}$, un écart relatif inférieur à 30%, voire inférieur à 3%. Dans le mode de réalisation décrit ici, le gain de correction $K_n$ est même égal au gain optimal $K_{n, opt}$.

Ledit gain optimal $K_{n, opt}$ est donné par les formules suivantes (à chaque exécution de l'étape de mise à jour, le gain de correction est donc déterminé conformément à ces formules) :

$$K_{n,opt} = P_{n_-}^{k,i} H_n^T S_n^{-1},$$

et

$$S_n = H_n P_{n-}^{k,i} H_n^T + V_{aug}$$

où $H_n^T$ est la matrice transposée de la matrice de mesure $H_n$, $S_n^{-1}$ est l'inverse de la matrice de covariance d'innovation $S_n$, et où $V_{aug}$ est une matrice de covariance augmentée.

Ici, la matrice de covariance $V_{aug}$ est égale à la matrice de covariance $R_n$ des bruits de mesure, multipliée par le nombre k : $V_{aug} = k. R_n$.

Par rapport à un filtre de Kalman conventionnel, l'erreur estimée $\hat{x}_n^{k,i}$ et sa matrice de covariance $P_n^{k,i}$ sont donc déterminées en se basant en quelque sorte sur une variance « augmentée » des bruits de propagation externes et des bruits de mesures, au lieu de se baser directement sur les variances respectives $(Q_n^e)$ et $(R_n)$ de ces bruits (dans un filtre de Kalman conventionnel, l'erreur estimée $\hat{x}_n^{k,i}$ serait déterminée au moyen des opérations décrites ci-dessus, mais en remplaçant les matrices de covariance augmentées $Q_{n,aug}^e$ et $V_{aug}$ par, respectivement, les matrices de covariance $Q_n^e$ et $R_n$, entres autres modifications).

C'est notamment grâce à cette technique d'augmentation de la variance que l'estimation corrigée $\hat{y}_{cor}^{k,i}$ , déterminée par le filtre de navigation $F_i^k$, est bien adaptée à être fusionnée avec un nombre k-1 d'autres estimations corrigées « k-fusionnables ».

Ainsi, employer les matrices de covariance augmentées $Q_{n,aug}^e$ et $V_{aug}$, au lieu des matrices de covariance $Q_n^e$ des bruits de propagation externes et $R_n$ des bruits de mesure, permet avantageusement que l'estimation moyenne $\hat{y}_F^{k,l}$ du vecteur d'état y du système, obtenue par fusion de k estimations corrigées choisies parmi les estimations corrigées $\hat{y}_{cor}^{k,1}, ..., \hat{y}_{cor}^{k,i}, ..., \hat{y}_{cor}^{k,N}$, soit une estimation optimale du vecteur d'état y.

Il est noté que l'estimation moyenne $\hat{y}_F^{k,l}$ du vecteur d'état *y* obtenue ainsi est optimale, alors même que chaque filtre de navigation $F_i^k$ individuel exécute les étapes a) et b), au cours desquelles l'estimation corrigée $\hat{y}_{cor}^{k,i}$ est déterminée, sans tenir compte de cette l'estimation moyenne $\hat{y}_F^{k,l}$ obtenue après fusion.

Dans ce système 1 de localisation, les estimations moyennes des paramètres de positionnement du système ne sont donc pas réinjectées en entrées des filtres de navigation $F_i^k$ individuels (tout au moins pas à chaque pas de calcul), si bien que les différents filtres de navigation opèrent indépendamment les uns des autres.

Le fait que l'augmentation de variance précitée rende l'estimation moyenne $\hat{y}_F^{k,l}$ du vecteur d'état y optimale peut se comprendre comme suit.

Les k filtres de navigation « k-fusionnables », dont les sorties $\hat{y}_{cor}^{k,i}$ sont fusionnées, fonctionnent indépendamment les uns des autres mais partagent entre eux des informations communes provenant de l'environnement et des capteurs communs. Par exemple, chacun de ces filtres subit la même anomalie de gravité et utilise les données de positionnement délivrées par le même système de position GPS précité. Les estimations corrigées $\hat{y}_{cor}^{k,i}$ délivrées par ces filtres présentent donc entre elles des corrélations, dont il faudrait tenir compte pour combiner entre elles ces estimations de manière optimale. Et, en l'occurrence, ces corrélations sont difficiles à évaluer.

L'augmentation de variance mentionnée ci-dessus permet, en quelque sorte, de décorréler les estimations corrigées $\hat{y}_{cor}^{k,i}$ déterminées par ces filtres de navigation. En effet, on peut considérer que chacun de ces k filtres de navigation reçoit seulement un k-ième des informations communes mentionnées ci-dessus (au lieu de la totalité de ces informations communes), et qu'en contrepartie l'estimation corrigée $\hat{y}_{cor}^{k,i}$ qu'il délivre est formellement indépendante des autres estimations corrigées. Une estimation optimale du vecteur d'état du système peut alors être obtenue en calculant directement la moyenne (éventuellement pondérée) des k estimations corrigées $\hat{y}_{cor}^{k,i}$ délivrées par ces filtres de navigation (puisque ces estimations sont formellement indépendantes les unes des autres). Comme la quantité d'information est égale à l'inverse de la covariance, pour affecter au filtre de navigation $F^k_i$ un k-ième seulement desdites informations communes, il faut multiplier par k la matrice de covariance $Q_n^e$ des bruits externes et la matrice de covariance $R_n$ des bruits de mesure.

Une justification mathématique du fait que l'estimation moyenne $\hat{y}_F^{k,l}$ du vecteur d'état *y* obtenue ainsi est optimale est présentée de manière plus complète plus bas (paragraphes relatifs à l'optimalité de la méthode).

On comprend toutefois dès à présent qu'il est souhaitable, pour que l'estimation moyenne $\hat{y}_F^{k,l}$ du vecteur d'état *y* soit optimale (ou tout au moins proche d'une solution optimale), d'augmenter non seulement les variances des bruits de propagation externes $(Q_n^e)$ et des bruits de mesure ($R_n$), mais aussi les composantes de la matrice de covariance initiale $P_0$ du vecteur d'erreur qui sont communes à tous les filtres.

Plus précisément, la matrice de covariance du vecteur d'erreur initial se décompose en une matrice bloc-diagonale :

$$P_0 = \begin{pmatrix} P_0^e & 0 \\ 0 & P_0^s \end{pmatrix}$$

Avec :

$P_0^s$ la matrice de covariance des erreurs systématiques (biais) de l'unité de mesure inertielle $U_i$ et

$P_0^e$ la matrice de covariance des erreurs initiales des paramètres de positionnement, des erreurs initiales relatives au modèle de l'environnement (anomalie de gravité), et des erreurs initiales des capteurs communs.

Puisque la matrice de covariance $P_0^e$ est représentative de sources de bruits ou d'erreur qui sont communes aux différents filtres de navigation, il est prévu, dans l'estimation initiale $P_0^{k,i}$ de la matrice de covariance du vecteur d'erreur, de prendre en compte la matrice $P_0^e$ en la multipliant par un coefficient supérieur à 1, préférentiellement en la multipliant par le nombre entier k. Ainsi, l'estimation initiale $P_0^{k,i}$ de la matrice de covariance du vecteur d'erreur prend ici la forme suivante :

$$P_0^{k,i} = \begin{pmatrix} k.P_0^e & 0 \\ 0 & P_0^s \end{pmatrix}.$$

A titre d'exemple, la matrice $P_0^s$ est ici une matrice diagonale 6x6 (cette matrice pourrait toutefois être non diagonale, selon le type d'unité de mesure inertielle employée), dont les trois premiers coefficients diagonaux sont égaux respectivement aux variances $p^o_{a\_UMI}$ des biais des accéléromètres de l'unité de mesure (qui ont été présentées plus haut). Les trois coefficients diagonaux suivants de cette matrice sont égaux respectivement aux variances $p^o_{g\_UMI}$ des biais des trois gyromètres de l'unité de mesure.

Quant à la matrice $P_0^e$, il s'agit ici d'une matrice diagonale 13x13 dont :

- les trois premier termes diagonaux sont les variances des erreurs initiales des paramètres de positionnement de l'unité de mesure inertielle $U_i$ (latitude, longitude, altitude), égales par exemple chacune à (20 mètres)[2],
- les trois termes diagonaux suivants sont les variances des erreurs initiales des vitesses de cette unité de mesure inertielle (respectivement vers le Nord, vers l'Ouest, et vers le haut), égales par exemple chacune à (0,5 mètre par seconde)2,

- les trois termes diagonaux suivants sont les variances des erreurs initiales des angles de cap, roulis et tangage de cette unité de mesure inertielle, égales par exemple chacune à (0,02 degrés)2,
- le terme diagonal suivant est la variance initiale de l'anomalie de gravité, égale ici à (10 micro-g)2,
- les trois termes diagonaux suivants sont les variances initiales des composantes de bruit corrélées temporellement affectant les mesures délivrées par le système de positionnement GPS, égales ici à (5 mètres)2.

La matrice de covariance $Q_n^e$ du bruit de propagation externe $v_n^e$, commun aux différentes unités de mesure inertielle,est ici une matrice diagonale dont quatre coefficients diagonaux sont non nuls. L'un de ces coefficients diagonaux est égal à la variance du bruit d'anomalie de gravité (partie stochastique de ce bruit, corrélé spatialement), notée $q_{grav}$. Les trois autres coefficients en question sont égaux respectivement aux variances $q_{GPS}$ des composantes de bruit corrélées temporellement des bruits affectant les mesures de longitude, de latitude et d'altitude délivrées par le système de positionnement GPS (ces composantes de bruit corrélées temporellement ont été décrites plus haut, lors de la présentation des capteurs communs).

La valeur suivante de la variance du bruit d'anomalie de gravité $q_{grav}$, est donnée à titre d'exemple : $q_{grav}=$ (10 μg)2. 2$v$Δt / $L_{grav}$,

où Δt est un pas de temps (entre deux pas de calculs successifs), v est la vitesse de l'unité de mesure inertielle, et où $L_{grav}$ est une longueur de corrélation du bruit d'anomalie de gravité.

Quant à la matrice de covariance $Q_n^s$ du bruit de propagation $v_n^s$, spécifique à chaque unité de mesure inertielle, il s'agit ici d'une matrice diagonale dont six coefficients diagonaux sont non nuls. Trois de ces coefficients diagonaux sont égaux respectivement aux variances $q_{a\_UMI}$ des bruits blancs que présentent les signaux d'accélération délivrés par l'unité de mesure inertielle $U_i$. Les trois autres coefficients en question sont égaux respectivement aux variances $q_{g\_UMI}$ des bruits blancs que présentent les signaux de vitesse angulaire délivrés par cette unité de mesure inertielle (ces bruits blancs ont été décrits plus haut, lors de la présentation des unités de mesure inertielle).

Enfin, la matrice de covariance $R_n$ des bruits de mesure est ici diagonale, et présente trois coefficients diagonaux non-nuls, égaux respectivement aux variances $r_{GPS}$ des composantes de bruit blanc des bruits affectant les mesures de longitude, de latitude et d'altitude délivrées par le système de positionnement GPS.

De manière optionnelle, le filtre de navigation $F_i^k$ est configuré pour remettre à zéro l'erreur estimée $\hat{x}^{k,i}$ si elle dépasse un seuil prédéterminé (par exemple si une norme de l'erreur estimée dépasse une valeur seuil prédéterminée). Lors de cette remise à zéro, les substitutions suivantes sont effectuées :

- la première estimation $\hat{y}_n^{k,i}$ est remplacée par l'estimation corrigée $\hat{y}_{cor,n}^{k,i}$ , et

- l'erreur estimée $\hat{x}_n^{k,i}$ est remise à zéro (c'est-à-dire remplacée par un vecteur nul).

On notera bien que cette remise à zéro n'est <u>pas</u> une réinjection de l'une estimations moyennes $\hat{y}_F^{k,l}$ (autrement dit de l'une des solutions globales) en entrée du filtre de navigation $F_i^k$ (cette remise à zéro reste une opération ne faisant intervenir que les estimations locales déterminées par le filtre de navigation $F_i^k$).

Le fait que le filtre de navigation $F_i^k$ soit configuré pour déterminer d'abord la grandeur intermédiaire que constitue l'erreur estimée $\hat{x}^{k,i}$, puis pour en déduire l'estimation corrigée $\hat{y}_{cor}^{k,i}$ du vecteur d'état $y$ du système, permet, notamment grâce à la remise à zéro mentionnée ci-dessus, de bénéficier d'équations de propagation et de mise à jour qui, en très bonne approximation, sont linéaires (ce qui simplifie d'autant l'implémentation de la méthode).

Fusion des estimations

Projection dans un même repère commun

Chaque filtre de navigation $F_i^k$ délivre, à chaque pas de calcul, l'estimation corrigée $\hat{y}_{cor,n}^{k,i}$ du vecteur d'état $y$ et l'estimation $P_n^{k,i}$ de la matrice de covariance du vecteur d'erreur $x$ (relatif au vecteur d'état $y$).

L'estimation corrigée $\hat{y}_{cor}^{k,i}$ est déterminée par le filtre de navigation $F_i^k$ pour un point et une orientation de référence propres à l'unité de mesure inertielle $U_i$. En effet, les accéléromètres de l'unité de mesure $U_i$ mesurent l'accélération du système 1 en un point donné de ce système, et ses gyromètres mesurent la vitesse angulaire du système autour d'axes de rotations propres à l'unité de mesure inertielle considérée. Ainsi, à titre d'exemple, l'angle de cap estimé par le filtre de navigation $F_i^k$ est ici un angle de cap de l'unité de mesure inertielle $U_i$, par rapport au référentiel terrestre.

Les unités de mesure inertielle sont de préférence alignées les unes par rapport aux autres. Mais de légers désalignements (généralement inférieurs au degré) peuvent toutefois subsister entre les différentes unités de mesure inertielle.

Par ailleurs, les unités de mesure inertielle sont situées à une distance réduite les unes des autres (une distance séparant deux quelconques des unités de mesure inertielle est de préférence inférieure à 3 mètres, voire, comme ici, inférieure à 1 mètre). Néanmoins, elles ne sont pas situées exactement au même point. Les vitesses de ces différentes unités de mesure (par rapport au référentiel terrestre) peuvent donc être légèrement différentes les unes des autres (lorsque la vitesse angulaire du système 1 est non nulle).

Pour tenir compte de ces légères différences d'alignement et de position, les différentes estimations corrigées $\hat{y}_{cor}^{k,1}$ , ..., $\hat{y}_{cor}^{k,i}$, ..., $\hat{y}_{cor}^{k,N}$ , et les estimations $P_n^{k,1}, ..., P_n^{k,i}, ..., P_n^{k,N}$ des matrices de covariance correspondantes, sont projetées dans un même repère commun. Ce sont les estimations projetées $\hat{y}_{cor,n}^{k,1}(u)$, ..., $\hat{y}_{cor,n}^{k,i}(u)$, ..., $\hat{y}_{cor,n}^{k,N}(u)$, et les matrices de covariance projetées $P_n^{k,1}(u), ..., P_n^{k,i}(u), ..., P_n^{k,N}(u)$, résultant de ces projections, qui sont ensuite moyennées entre elles pour obtenir les estimations moyennes $\hat{y}_F^{k,l}$, et les matrices de covariance correspondantes $P_F^{k,l}$. Le repère commun peut être un repère spécifié par un utilisateur du système 1 de positionnement.

La projection de l'estimation corrigée $\hat{y}_{cor,n}^{k,i}$ et de l'estimation $P_n^{k,i}$ de la matrice de covariance correspondante dans le repère commun est une opération de changement de repère, depuis un repère propre à l'unité de mesure inertielle, vers le repère commun précité. Cette projection est réalisée, ici au cours d'une sous-étape b3) de l'étape b) (figure 3), en fonction d'angles de désalignement repérant l'unité de mesure inertielle $U_i$ par rapport au repère commun (les valeurs de ces angles de désalignement peuvent être déterminées lors d'une phase préalable de mise en service du système de positionnement, appelée parfois phase d'alignement). Cette projection est réalisée aussi en fonction de la position du point de référence propre à cette unité de mesure inertielle (point de mesure des accélérations, dont la position est connue par construction), par rapport à un point de référence commun du système 1.

Détermination des estimations moyennes $\hat{y}_F^{k,l}$

Comme déjà indiqué, l'estimation moyenne $\hat{y}_F^{k,l}$ est déterminée en fusionnant k estimations corrigées choisies parmi les N estimations corrigées $\hat{y}_{cor}^{k,1}$ , ..., $\hat{y}_{cor}^{k,i}$, ..., $\hat{y}_{cor}^{k,N}$. L'ensemble de ces cas k estimations corrigées est noté $E^l$ dans la suite.

L'estimation moyenne $\hat{y}_F^{k,l}$ est déterminée plus précisément en calculant une moyenne arithmétique des k estimations projetées correspondant à l'ensemble $E^l$.

Cette moyenne arithmétique est pondérée si les estimations $P_n^{k,1}(u), ..., P_n^{k,i}(u), ..., P_n^{k,N}(u)$ des matrices de covariance sont notablement différentes les unes des autres (par exemple si elles présentent, les unes par rapport aux autres, des écarts supérieurs à un seuil donné), ou si les filtres ne navigation $F_i^k$ sont paramétrés différemment les uns de autres (c'est-à-dire s'ils opèrent sur la base de matrices de covariance distinctes, ou sur la base de matrice de gain K distinctes).

Sinon, cette moyenne arithmétique est non pondérée.

Lorsque cette moyenne arithmétique est calculée de manière pondérée, elle l'est conformément à la formule suivante :

$$\hat{y}_{F,n}^{k,l} = P_{F,n}^{k,l} \sum\nolimits_{E^l} \left(P_n^{k,i}(u)\right)^{-1} \hat{y}_{cor,n}^{k,i}(u) \qquad \text{où } P_{F,n}^{k,l} = \left(\sum\nolimits_{E^l} \left(P_n^{k,i}(u)\right)^{-1}\right)^{-1}$$

la somme $\Sigma_{E^l}$ portant sur l'ensemble des estimations projetées $\hat{y}_{cor,n}^{k,i}(u)$ correspondant à l'ensemble $E^l$.

Lorsque cette moyenne arithmétique est calculée de manière non pondérée, elle l'est conformément à la formule suivante :

$$\hat{y}_{F,n}^{k,l} = \frac{1}{k} \sum\nolimits_{E^l} \hat{y}_{cor,n}^{k,i}(u)$$

la somme $\Sigma_{E^l}$ porte là aussi sur l'ensemble des estimations projetées $\hat{y}_{cor,n}^{k,i}(u)$ correspondant à l'ensemble $E^l$.

La matrice de covariance des erreurs affectant l'estimation moyenne $\hat{y}_{F,n}^{k,l}$ est alors estimée conformément à la formule suivante :

$$P_{F,n}^{k,l} = \frac{1}{k^2} \sum\nolimits_{E^l} P_n^{k,i}(u).$$

Le module de fusion $F_{us}^k$ délivre en sortie à la fois l'estimation moyenne $\hat{y}_{F,n}^{k,l}$ et l'estimation $P_{F,n}^{k,l}$ de la matrice de covariance correspondante.

Architecture optimisée des filtres « k-fusionnables »

Il est noté que, dans l'exemple de réalisation décrit ici, les différentes unités de mesure inertielle du système 1 présentent des rapports signal sur bruit très proches, voire même égaux. Par ailleurs, comme ces unités de mesure inertielle sont proches les unes des autres et sont fixées rigidement au même support, leurs dynamiques respectives ne présentent que de légères différences qui se moyennent dans le temps et se compensent entre elles.

En très bonne approximation, on peut donc considérer ici que les matrices $P_0^{k,i}$, $Q_n^s$, $Q_{n,aug}^e$ et $V_{aug}$ de deux quelconques des filtres de navigation « k-fusionnables » sont identiques pour ces deux filtres.

Par ailleurs, en ce qui concerne l'estimation $P_n^{k,i}$ de la matrice de covariance, et le gain de correction $K_n$, la même matrice $F_n$ (relative à la dynamique des unités de mesure inertielle) et la même matrice $H_n$ (relative à la mesure) peuvent être utilisée pour les différents filtres « k-fusionnables ».

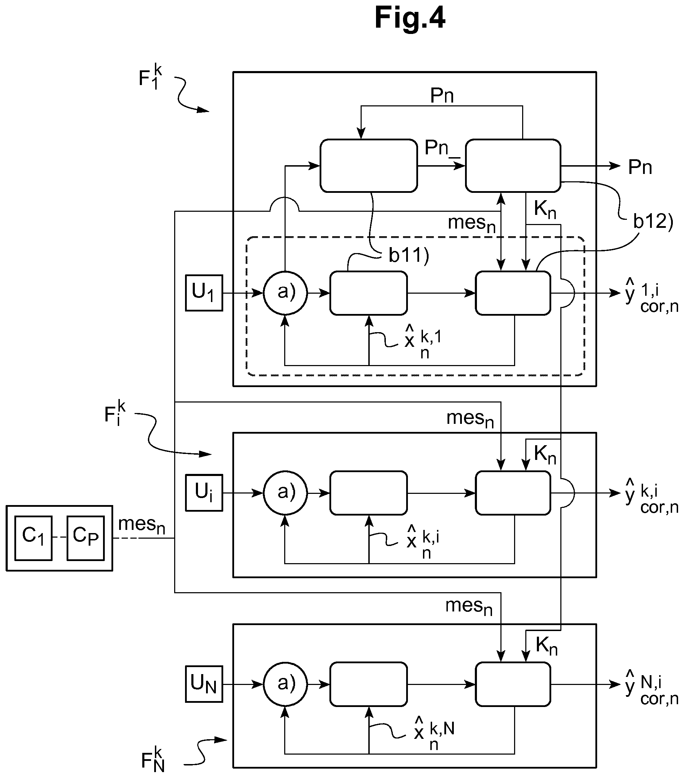

Le gain de correction $K_n$ et l'estimation $P_n^{k,i}$ de la matrice de covariance présentent alors, pour chacun des filtres de navigation $F_i^k$ « k-fusionnables », des valeurs identiques. Il est donc prévu ici, à chaque pas de calcul, de calculer ces grandeurs une seule fois pour l'ensemble des filtres de navigation « k-fusionnables », et de distribuer ensuite le résultat de ce calcul à chacun de ces filtres (qui fonctionnent alors de manière synchronisée), comme représenté schématiquement sur la figure 4.

Cette dernière disposition permet alors avantageusement de réduire le temps et/ou les ressources de calcul nécessaires à l'obtention des estimations corrigées $\hat{y}_{cor}^{k,1}$, ..., $\hat{y}_{cor}^{k,i}$, ..., $\hat{y}_{cor}^{k,N}$.

Comme mentionnée ci-dessus, les matrices de covariance sont alors identiques, $P_n^{k,1} = \cdots = P_n^{k,i} = \cdots = P_n^{k,N}$, leur valeur commune est notée $P_n^k$. La matrice de covariance des erreurs affectant les estimations moyennes $\hat{y}_{F,n}^{k,l}$ ne dépend alors pas de l'ensemble $E^l$ des estimations moyennées. Elle est déterminée conformément à la formule suivante :

$$P_{F,n}^k = \frac{1}{k}\, P_n^k.$$

### Optimalité de la méthode

Le fait que l'estimation moyenne $\hat{y}_{F,n}^{k,l}$ soit une estimation optimale du vecteur d'état $y$ du système est justifié mathématiquement ci-dessous, dans un cas légèrement simplifié pour lequel les différentes unités de mesure inertielle sont placées en un même point, et présentent la même orientation les unes par rapport aux autres.

Pour montrer que l'estimation moyenne $\hat{y}_{F,n}^{k,l}$ est optimale, elle est comparée avec une estimation de référence, qui est connue pour être optimale.

L'estimation de référence est une estimation qui serait obtenue par les opérations suivantes :

- fusion préalable des signaux d'accélération et de vitesse angulaire provenant des k unités de mesure inertielle considérées ici (celles impliquées dans l'obtention de l'estimation moyenne $\hat{y}_{F,n}^{k,l}$), pour obtenir trois signaux d'accélération et trois signaux de vitesse angulaire fusionnés, puis
- filtrage des signaux d'accélération et de vitesse angulaire fusionnés, au moyen d'un filtre de Kalman individuel (recevant en entrées les mesures $mes_n$ délivrés par les capteurs communs, en plus des signaux fusionnés précités).

Ce dernier filtre de Kalman reçoit des signaux fusionnés, provenant en quelque sorte d'une unité de mesure inertielle virtuelle (« fusionnée »), plus précise que l'une des unités de mesure inertielle considérée seule. Il délivre :

- une première estimation de référence $\hat{y}_{REF,n}^{k,l}$ du vecteur d'état y du système,
- une erreur estimée de référence $\hat{x}_{REF,n}^{k,l}$ (estimation de l'écart entre le vecteur d'état y et la première estimation de référence $\hat{y}_{REF,n}^{k,l}$ de ce vecteur), et
- une estimation de référence $P_{REF,n}$ d'une matrice de covariance de l'écart $X_{REF}$ entre le vecteur d'état y et la première estimation de référence $\hat{y}_{REF,n}^{k,l}$ de ce vecteur.

Les unités de mesure inertielle sont supposées présenter le même rapport signal sur bruit. Le filtre de Kalman associé à l'unité de mesure inertielle virtuelle mentionnée ci-dessus doit alors être paramétré par :

- une matrice de covariance des bruits de propagation externe $Q_{REF,n}^e$ égale à :

$$Q_{REF,n}^e = Q_n^e$$

- une matrice de covariance des bruits de propagation spécifique $Q_{REF,n}^s$ égale à :

$$Q_{REF,n}^s = Q_n^s/k,$$

et par
- une estimation initiale $P_{0,REF}$ de la matrice de covariance du vecteur d'erreur $X_{REF}$ égale à :

$$P_{0,REF} = \begin{pmatrix} P_0^e & 0 \\ 0 & P_0^s/k \end{pmatrix}.$$

(ce qui traduit que l'unité de mesure inertielle virtuelle est en quelque sorte $\sqrt{k}$ fois plus précise que l'une des unités de mesure inertielle considérée seule).

Il est connu que la quantité $\hat{y}_{REF,n}^{k,l} + \hat{x}_{REF,n}^{k,l}$ , déterminée par ce filtre de Kalman, est l'estimation optimale du vecteur d'état *y* du système.

Nous montrons maintenant, par récurrence, que l'estimation moyenne $\hat{y}_{F,n}^{k,l}$ est, à chaque pas de calcul, égale à l'estimation de référence $\hat{y}_{REF,n}^{k,l} + \hat{x}_{REF,n}^{k,l}$, et qu'elle est donc elle aussi optimale.

Compte tenu de la linéarité de l'opération de projection des estimations corrigées dans le repère commun, l'estimation moyenne $\hat{y}_{F,n}^{k,l}$ peut s'écrire aussi sous la forme :

$$\hat{y}_{F,n}^{k,l} = \hat{y}_{F,uncorr,n}^{k,l} + \hat{x}_{F,n}^{k,l}$$

où

$$\hat{y}_{F,uncorr,n}^{k,l} = \frac{1}{k} \sum_{E^l} \hat{y}_n^{k,i}(u)$$

et où

$$\hat{x}_{F,n}^{k,l} = \frac{1}{k} \sum_{E^l} \hat{x}_n^{k,i}(u).$$

Pour simplifier, nous supposons que les erreurs estimées $\hat{x}_n^{k,i}$ sont remises à zéro simultanément pour tous les filtres de navigation considérés.

Juste après cette remise à zéro, au pas de calcul initial n=0, les égalités suivantes sont donc vérifiées :

$\hat{y}_{F,uncorr,0}^{k,l} = \hat{y}_{REF,0}^{k,l}$ et $\hat{x}_{F,0}^{k,l} = \hat{x}_{REF,0}^{k,l}$. Par ailleurs, on note que $P_{F,0}^{k,l} = P_{0,REF}$.

L'hypothèse de récurrence est que, au pas de calcul n-1, les égalités suivantes sont vérifiées :

$\hat{y}_{F,uncorr,n-1}^{k,l} = \hat{y}_{REF,n-1}^{k,l}$ , $\hat{x}_{F,n-1}^{k,l} = \hat{x}_{REF,n-1}^{k,l}$ , et $P_{F,n-1}^{k,l} = P_{REF,n-1}$.

Nous montrons alors que ces égalités sont encore vraies au pas de calcul n.

Pour ce qui est des premières estimations $\hat{y}_{F,uncorr,n}^{k,l}$ et $\hat{y}_{REF,n}^{k,l}$ (obtenues par intégration temporelle des signaux d'accélération et de vitesse angulaire), elles sont indépendantes du filtre de navigation considéré ; elles ne dépendent que des estimations antérieures et des signaux d'accélération et de vitesse angulaire. En l'occurrence, cette dernière dépendance est de type linéaire. On a donc $\hat{y}_{F,uncorr,n}^{k,l} = \hat{y}_{REF,n}^{k,l}$ .

Par ailleurs, compte tenu :

- des équations de propagation satisfaites par les erreurs estimées $\hat{x}_n^{k,i}$,
- de la linéarité des opérations de projection dans le repère commun et de fusion,
- et du fait que les unités de mesure inertielle sont supposées colocalisées, et de même rapport signal sur bruit,

l'erreur moyenne estimée $\hat{x}_{F,n}^{k,l}$, et l'estimation $P_{F,n}^{k,l}$ de sa matrice de covariance suivent les équations de propagation suivantes :

$$\hat{x}_{F,n_-}^{k,l} = F_n\, \hat{x}_{F,n-1}^{k,l}\, ,$$

et

$$P_{F,n_-}^{k,l} = F_n\, P_{F,n-1}^{k,l}\, F_n^T + Q_{n,aug}^e/k + Q_n^s/k.$$

Or l'erreur estimée de référence $\hat{x}_{REF,n}^{k,l}$ et l'estimation $P_{REF,n}$ de sa matrice de covariance satisfont les équations de propagation suivantes :

$$\hat{x}_{REF,n_-}^{k,l} = F_n\, \hat{x}_{REF,n-1}^{k,l}\, ,$$

et

$$P_{REF,n_-} = F_n\, P_{REF,n-1}\, F_n^T + Q_{REF,n}^e + Q_{REF,n}^s.$$

La matrice de covariance $Q_{REF,n}^e$ du bruit de propagation externe de l'unité de mesure inertielle virtuelle (fusionnée) est égale à $Q_n^e$, et est donc égale à $Q_{n,aug}^e/k.$ La matrice de covariance $Q_{REF,n}^s$ du bruit de propagation spécifique est quant à elle égale à $Q_n^s/k.$

Les équations de propagation sont donc identiques pour $\hat{x}_{F,n}^{k,l}$ et $P_{F,n}^{k,l}$ d'une part, et pour $\hat{x}_{REF,n}^{k,l}$ et $P_{REF,n}$ d'autre part.

L'hypothèse de récurrence est donc préservée par l'étape de propagation.

Nous considérons maintenant l'étape de mise à jour.

Pour chaque filtre de navigation « k-fusionnable », la matrice de covariance d'innovation $S_n$ est calculée, au pas de calcul n, conformément à la formule suivante : $S_n = H_n\, P_{n_-}^{k,l} H_n^T + k.R_n.$

En conséquence, $S_n = k.\left(H_n\, P_{REF,n_-}\, H_n^T + R_n\right) = k.S_{REF,n}.$

Le gain de correction $K_n$, déterminé par chaque filtre de navigation « k-fusionnable », peut donc être exprimé ainsi :

$$K_n = P_{n_-}^{k,l} H_n^T S_n^{-1} = \left(k.P_{REF,n_-}\right) H_n^T \left(k.S_{REF,n}\right)^{-1} = P_{REF,n_-}\, H_n^T\, S_{REF,n}^{-1} = K_{REF,n}$$

Le gain de correction $K_n$, déterminé par chaque filtre de navigation « k-fusionnable » est donc égal au gain de correction $K_{REF,n}$ déterminé par le filtre de Kalman associé à l'unité de mesure inertielle virtuelle.

Compte tenu :

-   des équations de mise à jour satisfaites par les erreurs estimées $\hat{x}_n^{k,i}$, et
-   de la linéarité des opérations de projection dans le repère commun et de fusion,

l'erreur moyenne estimée $\hat{x}_{F,n}^{k,l}$ et l'estimation $P_{F,n}^{k,l}$ de sa matrice de covariance suivent les équations de mise à jour suivantes :

$$\hat{x}_{F,n}^{k,l} = \hat{x}_{F,n_-}^{k,l} + K_n\big(mes_n - H_n\big[\hat{y}_{F,uncorr,n}^{k,l} + \hat{x}_{F,n_-}^{k,l}\big]\big),$$

et

$$P_{F,n}^{k,l} = (Id - K_n H_n) P_{F,n_-}^{k,l}.$$

L'erreur estimée de référence $\hat{x}_{REF,n}^{k,l}$ et l'estimation $P_{REF,n}$ de sa matrice de covariance satisfont quant à elles les équations de mise à jour suivantes :

$$\hat{x}_{REF,n}^{k,l} = \hat{x}_{REFF,n_-}^{k,l} + K_{REF,n}\big(mes_n - H_n\big[\hat{y}_{REF,n}^{k,l} + \hat{x}_{REF,n_-}^{k,l}\big]\big),$$

et

$$P_{REF,n} = \big(Id - K_{REF,n} H_n\big) P_{REF,n_-}.$$

Or il a été montré que $K_n = K_{REF,n}$ et que $\hat{y}_{F,uncorr,n}^{k,l} = \hat{y}_{REF,n}^{k,l}$.

Les équations de mise à jour sont donc identiques pour $\hat{x}_{F,n}^{k,l}$ et $P_{F,n}^{k,l}$ d'une part, et pour $\hat{x}_{REF,n}^{k,l}$ et $P_{REF,n}$ d'autre part.

L'hypothèse de récurrence est donc préservée aussi par l'étape de mise à jour.

Par récurrence, on en déduit donc finalement que l'estimation moyenne $\hat{y}_{F,n}^{k,l}$ est, à chaque pas de calcul, égale à l'estimation de référence $\hat{y}_{REF,n}^{k,l} + \hat{x}_{REF,n}^{k,l}$ (qui est l'estimation optimale du vecteur d'état *y* du système), et que l'estimation $P_{F,n}^{k,l}$ de la matrice de covariance de son erreur est aussi la meilleure estimation de cette matrice.

L'utilisation de filtres de Kalman individuels modifiés (avec augmentation des variances), suivie d'une fusion des estimations, permet donc d'obtenir une estimation aussi bonne que si l'on fusionnait préalablement les signaux d'accélération et de vitesse angulaire de plusieurs unités de mesure inertielle, avant de les filtrer au moyen d'un seul filtre de Kalman individuel.

Il est rappelé à ce propos que le fait de réaliser le filtrage *avant* la fusion permet de n'avoir à mettre en œuvre que $N^2$ filtre de navigation (au lieu de $2^N-1$) pour estimer les $2^N-1$ estimations moyennes $\hat{y}_F^{k,l}$ distinctes.

Enfin, concernant la démonstration ci-dessus, il est noté qu'une différence éventuelle entre les seuils de remise à zéro des erreurs estimées $\hat{x}_n^{k,i}$ n'a qu'une influence négligeable (influence d'ordre 2 ou moins, par rapport au terme correctif mentionné plus haut, par exemple) sur l'estimation moyenne $\hat{y}_{F,n}^{k,l}$ ou sur la matrice de covariance qui lui est associée.

## Scénario de recalage pour les capteurs externes

Il peut advenir que l'un des capteurs externes C1, ... Cp délivre des mesures des paramètres de positionnement du système de manière intermittente (cas d'un sonar par exemple), ou dans certaines circonstances seulement (par exemple, si le système de localisation équipe un sous-marin, le système de positionnement GPS n'est disponible que lorsqu'une antenne du sous-marin est émergée ou située à la surface de l'eau).

On est donc amené à définir un ou plusieurs scénarios de recalage. Chaque scénario de recalage est une donnée des instants et modalités de prise en compte, par les filtres de navigation, des mesures $mes_n$ délivrées par les

capteurs communs C1, ..., Cp.

Un exemple d'un tel scénario de recalage est le suivant :

- les mesures délivrées par le système de positionnement GPS ne sont prises en compte qu'à partir d'une date $t_1$ donnée (car elles ne peuvent être déterminées par le système GPS qu'à partir de cette date), et
- des mesures délivrées par un autre des capteurs commun, réalisé au moyen d'un loch électromagnétique, sont prises en compte en permanence (à chaque pas de calcul) par les filtres de navigation.

Pour améliorer la robustesse du système 1 de localisation vis-à-vis d'une défaillance ou indisponibilité éventuelle de l'un des capteurs communs, on peut prévoir que l'unité de traitement 10 détermine les $2^N$-1 estimations moyennes en parallèle pour M scénarios de recalage Sc1, ... , ScM différents (figure 2). L'unité de traitement 10 comprend dans ce cas $M \times N^2$ filtres de navigations indépendants (et détermine $M \times (2^N$-1) estimations moyennes distinctes).

Pour chaque scénario de recalage, au sein de chacun des ensembles de filtres de navigation $F^k$, $1 \leq k \leq N$ (par exemple au sein de l'ensemble $F^N$ des filtres de navigation « N-fusionnables »), les mesures délivrées par les capteurs communs sont prises en compte de la même manière par les différents filtres de navigation $F_1^k$, ..., $F_i^k$, ..., $F_N^k$ dudit ensemble $F^k$. Grâce à cette disposition, les estimations moyennes $\hat{y}_F^{k,l}$ conservent leur caractère optimal (ou quasi-optimal).

Exemple de résultats

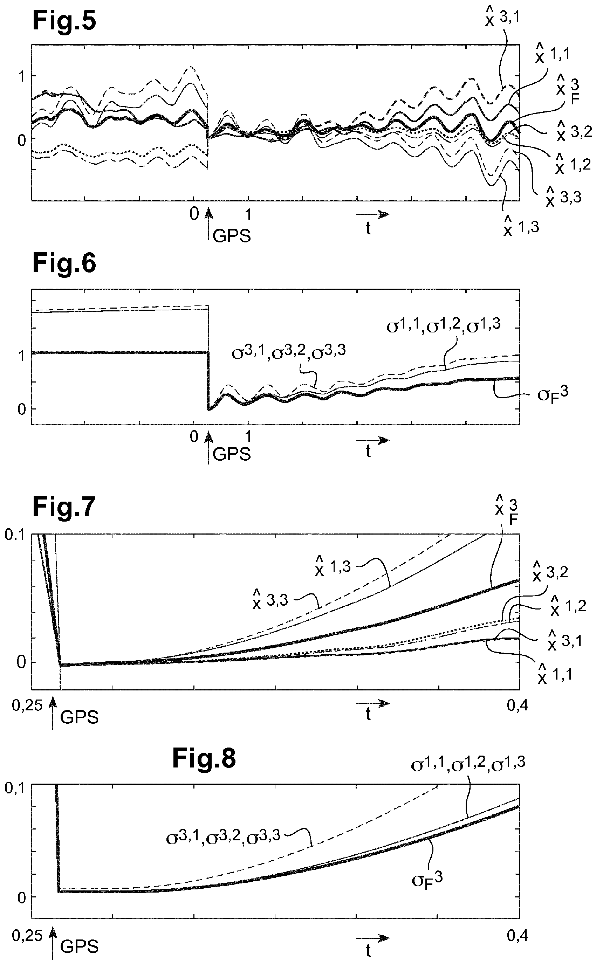

Les figures 5 à 8 représentent schématiquement l'évolution au cours du temps t de différentes estimations de la latitude du navire 2, déterminées par le système 1 de localisation décrit ci-dessus, pour un exemple de phase de navigation, dans le cas où le nombre N d'unités de mesure inertielle du système est égal à 3.

Au cours de cette phase de navigation, les capteurs communs utilisés sont :

- un loch électromagnétique, qui délivre des mesures tout au long de cette phase de navigation, et
- le système de positionnement GPS, qui n'est opérationnel que pendant un court intervalle de temps, situé environ au premier tiers de cette phase de navigation (le début de cet intervalle est repéré sur ces figures par la flèche portant la référence « GPS »).

La figure 5 représente (en unités arbitraires) l'évolution temporelle :

- des erreurs estimées $\hat{x}^{1,1}(u)$, $\hat{x}^{1,2}(u)$, $\hat{x}^{1,3}(u)$ (projetées dans le repère commun), déterminées par les 3 filtres de navigation classiques « 1-fusionnables », à partir des signaux délivrés respectivement par les trois unités de mesure inertielle $U_1$, $U_2$ et $U_3$,
- des erreurs estimées $\hat{x}^{3,1}(u)$, $\hat{x}^{3,2}(u)$, $\hat{x}^{3,3}(u)$ (projetées dans le repère commun), déterminées par les 3 filtres de navigation « 3-fusionnables », à partir des signaux délivrés respectivement par les trois unités de mesure inertielle $U_1$, $U_2$ et $U_3$, et
- de l'erreur estimée moyenne $\hat{x}_F^3$ obtenue par fusion des trois erreurs estimées $\hat{x}^{3,1}(u)$, $\hat{x}^{3,2}(u)$, $\hat{x}^{3,3}(u)$.

Les écarts-types respectifs des erreurs estimées $\hat{x}^{1,1}(u)$, $\hat{x}^{1,2}(u)$, $\hat{x}^{1,3}(u)$ , $\hat{x}^{3,1}(u)$, $\hat{x}^{3,2}(u)$, $\hat{x}^{3,3}(u)$ et $\hat{x}_F^3$ sont notés $\sigma^{1,1}$, $\sigma^{1,2}$, $\sigma^{1,3}$, $\sigma^{3,1}$, $\sigma^{3,2}$, $\sigma^{3,3}$ et $\sigma_F^3$. Leur évolution temporelle est représentée schématiquement sur la figure 6, pour la même phase de navigation. Les valeurs de ces écarts-types sont obtenues directement à partir des matrices de covariance $P_n^{1,i}$, $P_n^{3,i}$ et $P_{F,n}^{3,l}$ correspondantes. Ici, l'indice i varie de 1 à 3 et l'indice l prend une seule valeur : il y a une seule fusion à 3 filtres lorsqu'il y a 3 unités de mesure inertielle.

Les figures 7 et 8 sont des vues de détail, respectivement des figures 5 et 6, montrant plus en détail une partie de la phase de navigation considérée, cette partie comprenant l'intervalle de temps pendant lequel le système de positionnement GPS est opérationnel.

On constate sur cet exemple de phase de navigation que :

- l'erreur estimée moyenne $\hat{x}_F^3$, obtenue par fusion des trois erreurs estimées $\hat{x}^{3,1}(u)$, $\hat{x}^{3,2}(u)$, $\hat{x}^{3,3}(u)$ « 3-fusionnables », fournit une estimation de latitude meilleure que celles, $\hat{x}^{1,1}(u)$, $\hat{x}^{1,2}(u)$, $\hat{x}^{1,3}(u)$, obtenues sur la base une seule unité de mesure inertielle ;

- l'écart-type $\sigma_F^3$ de l'estimation de latitude de la solution de navigation fusionnée $\hat{x}_F^3$ est meilleur que (c'est-à-dire inférieur à) ceux, $\sigma^{1,1}$, $\sigma^{1,2}$, $\sigma^{1,3}$ obtenues sur la base d'une seule unité de mesure inertielle ; toutefois, lorsque les mesures délivrées par le système de positionnement GPS sont disponibles, ces différents écarts-types présentent des valeurs très proches ; en effet c'est le système de positionnement GPS qui contribue alors à l'essentiel de l'estimation de la latitude, et le fait de disposer de 1 ou de 3 unités de mesure inertielle change peu la qualité de l'estimation ; ceci illustre que la méthode d'estimation employée tient compte convenablement des corrélations entre erreurs estimées qui pourraient être induites par les mesures délivrées par les capteurs communs ;

- les différents écarts-types $\sigma^{1,1}$, $\sigma^{1,2}$, $\sigma^{1,3}$ des estimations issues des filtres de navigation « 1-fusionnables » sont égaux entre eux, ou tout au moins très proches les uns des autres (sur les figures 6 et 8, les trois courbes correspondantes sont superposées entre elles), et il en est de même pour les écarts-types, $\sigma^{3,1}$, $\sigma^{3,2}$, $\sigma^{3,3}$ des estimations issues des filtres de navigation « 3-fusionnables » ; cela valide l'hypothèse selon laquelle les unités de mesure inertielle peuvent, pour ce qui est du calcul des matrices de covariances des erreurs et des gains de correction, être considérées comme co-localisées ;

- les écarts-types $\sigma^{3,1}$, $\sigma^{3,2}$, $\sigma^{3,3}$ des estimations issues des filtres de navigation « 3-fusionnables » sont bien supérieurs aux écarts-types $\sigma^{1,1}$, $\sigma^{1,2}$, $\sigma^{1,3}$ des estimations issues des filtres de navigation « 1-fusionnables » (en particulier lorsque le système de positionnement GPS est opérationnel), ce qui est cohérent de l'augmentation de covariance appliquée ;

- avant fusion, les erreurs estimées $\hat{x}^{3,1}(u)$, $\hat{x}^{3,2}(u)$, $\hat{x}^{3,3}(u)$ délivrées par les trois filtres « 3-fusionnables » sont supérieures à celles délivrées par les filtres « 1-fusionnables », et sont donc considérées comme moins bonnes (en l'occurrence non-optimales) ; elles sont toutefois d'une qualité proche de celles délivrées par les filtres « 1-fusionnables », surtout en l'absence prolongée de mesure provenant du système de localisation GPS ;

- pour chacune des erreurs estimées considérées ci-dessus, les valeurs présentées par cette erreur estimée sont cohérentes avec celles de l'écart-type correspondant.

<u>Module de détection d'erreur</u>

L'unité de traitement 10 peut, comme ici, comprendre un module de détection d'erreur, optionnel, permettant de détecter automatiquement une défaillance éventuelle de l'une des unités de mesure inertielle.

Le module de détection d'erreur est configuré de manière à, pour chaque couple de 2 unités de mesure inertielle $U_i$ et $U_j$ :

- calculer une différence $r_n^{ij}$ entre les estimations corrigées $\hat{y}_{cor,n}^{1,i}(u)$, $\hat{y}_{cor,n}^{1,j}(u)$ du vecteur d'état y, délivrés respectivement par les deux filtres de navigation $F^1_i$ et $F^1_j$, « 1-fusionnables », associés au couple d'unités de mesure inertielle $U_i$ et $U_j$,

- déterminer une matrice de covariance attendue $M_n^k$ pour ladite différence $r_n^{ij}$,

- tester au moyen d'un test statistique, ici un test du khi2, si ladite différence $r_n^{ij}$ est compatible, ou incompatible, avec ladite matrice de covariance attendue $M_n^k$, et

- en cas d'incompatibilité, déterminer qu'une erreur est survenue dans le fonctionnement de l'une desdites deux unités de mesure inertielle.

La différence $r_n^{ij}$ est déterminée plus précisément en calculant la différence entre des versions tronquées $\widehat{ye}_{cor,n}^{1,i}$ et $\widehat{ye}_{cor,n}^{1,j}$ des estimations corrigées $\hat{y}_{cor,n}^{1,i}(u)$ et $\hat{y}_{cor,n}^{1,j}(u)$, comme expliqué ci-dessous.

L'estimation corrigée $\hat{y}_{cor,n}^{1,i}(u)$ est un vecteur de dimension $d = d_e + d_s$, dont les coordonnées d'indice $l = 1, ..., d_e$ sont les estimations des différentes grandeurs de navigation (latitude, longitude,...) et d'environnement, communes à toutes les unités de mesure inertielle, et dont les $d_s$ coordonnées suivantes sont propres à l'unité de mesure inertielle $U_i$ (biais et facteur d'échelle de cette unité de mesure inertielle).

La restriction de l'estimation corrigée $\hat{y}_{cor,n}^{1,i}(u)$ à ses $d_e$ premières coordonnées est notée $\widehat{ye}_{cor,n}^{1,i}$, et le vecteur de différence $r_n^{ij}$ est égal à :

$$r_n^{ij} = \widehat{ye}_{cor,n}^{1,j} - \widehat{ye}_{cor,n}^{1,i} \, .$$

De manière comparable :

- la matrice de covariance $P_n^{1,i}(u)$ de l'erreur associée à l'estimation corrigée $\hat{y}_{cor,n}^{1,i}(u)$, une fois restreinte à son premier bloc de dimension $d_e \times d_e$, est notée $Pe_n^{1,i}$, et

- la matrice de covariance de l'erreur associée à l'estimation corrigée $\hat{y}_{cor,n}^{k,i}(u)$, une fois restreinte à son premier bloc de dimension $d_e \times d_e$, est notée $Pe_n^{k,i}$.

De manière remarquable, la matrice de covariance attendue $M_n^k$ est déterminée comme suit :

- pour k=1 : $M_n^1 = Pe_n^{1,i} + Pe_n^{1,j}$ et

- pour k >1 : $M_n^k = Pe_n^{1,i} + Pe_n^{1,j} - \frac{1}{k-1}\left(Pe_n^{k,i} + Pe_n^{k,j} - Pe_n^{1,i} - Pe_n^{1,j}\right)$

Le nombre entier k joue le rôle d'un paramètre réglable, permettant de régler la sensibilité du module de détection d'erreur. La valeur du nombre k est fixée en fonction de la sensibilité de détection souhaitée.

En effet, la matrice $M_n^k$ dépend de la valeur choisie pour k, et, plus cette matrice est petite, plus la détection d'erreur est sensible.

Pour k=1, les corrélations éventuelles entre les deux estimations corrigées $\hat{y}_{cor,n}^{1,i}(u)$ et $\hat{y}_{cor,n}^{1,j}(u)$ ne sont pas prises en compte dans le calcul de la matrice de covariance $M_n^k$ (puisque $M_n^1 = Pe_n^{1,i} + Pe_n^{1,j}$), et ses estimations corrigées sont alors considérées comme indépendantes.

Pour k>1, ces corrélations sont prises en compte, via le terme $\frac{1}{k-1}\left(Pe_n^{k,i} + Pe_n^{k,j} - Pe_n^{1,i} - Pe_n^{1,j}\right)$, ce qui permet de réduire les valeurs de la matrice $M_n^k$, et de rendre le test avantageusement plus sensible qu'un test qui ignorerait l'existence de ces corrélations.

On notera que même pour k>1, la variance du vecteur de différence $r_n^{ij}$ est inférieure à la matrice $M_n^k$ (si les unités de mesure inertielle $U_i$ et $U_j$ présentent des rapports signal sur bruit assez proches).

La compatibilité du vecteur de différence $r_n^{ij}$ avec la matrice de covariance $M_n^k$ attendue pour ce vecteur peut alors être testée globalement, en considérant toutes les coordonnées de ce vecteur (de dimension $d_e$).

Dans ce cas, la quantité $\left(r_n^{ij}\right)^T . (M_n^k)^{-1}. r_n^{ij}$ est calculée. Si cette quantité est supérieure ou égale à $\chi^2(d_e)_{1-\alpha}$ le vecteur de différence $r_n^{ij}$ est considéré incompatible avec l'estimation $M_n^k$ de sa matrice de covariance, et il est déterminé que l'une des unités de mesure inertielle du couple $U_i$, $U_j$ est défaillante (à ce stade, on ne sait pas nécessairement si l'une, l'autre, ou les deux unités de mesure inertielle de ce couple sont défaillantes).

Au contraire, si la quantité $\left(r_n^{ij}\right)^T . (M_n^k)^{-1}. r_n^{ij}$ s'avère inférieure à $\chi^2(d_e)_{1-\alpha}$, le fonctionnement de chacune des deux unités de mesure inertielle $U_i$ et $U_j$ est déclaré normal (non défaillant).

$\chi^2(d_e)_{1-\alpha}$ est le quantile d'ordre 1 - $\alpha$ de la loi du $\chi^2$ à $d_e$ degrés de liberté.

Il peut être montré mathématiquement que ce test de compatibilité qui, de manière originale, est basé sur ladite matrice de covariance $M_n^k$, a une probabilité de fausse alarme inférieure ou égale au paramètre $\alpha$ (ce qui montre la pertinence de ce test, basé sur la comparaison de la matrice $M_n^k$ avec les coefficients du khi2 mentionnés ci-dessus). Le paramètre $\alpha$ peut par exemple être choisie égal à 1%, ou à 5%.

Le test statistique mentionné plus haut peut aussi être appliqué au vecteur de différence non tronqué, égal à $\hat{y}_{cor,n}^{1,j}(u) - \hat{y}_{cor,n}^{1,i}(u)$, avec la matrice de covariance attendue donnée par la formule suivante

$$M_n^k = P_n^{1,i} + P_n^{1,j} - \frac{1}{k-1}\left(P_n^{k,i} + P_n^{k,j} - P_n^{1,i} - P_n^{1,j}\right)$$

Le test statistique mentionné plus haut peut également être appliqué à une autre troncature du vecteur de différence, avec la troncature correspondante pour la matrice de covariance attendue.

Le test statistique mentionné plus haut peut aussi être appliqué au vecteur de résidus $r_n^{ij}$ coordonnée par coordonnée, au lieu de tester de manière globale la compatibilité de ce vecteur avec la matrice de covariance attendue $M_n^k$.

Dans ce cas, pour chaque coordonnée (autrement dit pour chaque composante) $r_n^{ij}(l)$ d'indice $l$ compris entre 1 et $d_e$, la quantité $M_n^k(l,l)^{-1} \cdot r_n^{ij}(l)^2$ est calculée, et si elle est supérieure ou égale à $\chi^2(1)_{1-\alpha}$, il est déterminé que l'une des unités de mesure inertielle du couple $U_i$, $U_j$ est défaillante.

Au contraire, si la quantité $M_n^k(l,l)^{-1} \cdot r_n^{ij}(l)^2$ est inférieure à $\chi^2(1)_{1-\alpha}$ pour chaque composante du vecteur de résidus, le fonctionnement de chacune des deux unités de mesure inertielle $U_i$ et $U_j$ est déclaré normal.

Ce test de compatibilité est réalisé pour tous les couples de deux unités de mesure inertielle $U_i$, $U_j$, soit, pour N.(N-1)/2 couples distincts de deux unités de mesure inertielle. A partir de l'ensemble des résultats de ces tests, les unités de mesure inertielle défaillantes sont identifiées. Plus précisément, l'une des unités de mesure est identifiée comme étant défaillante si, pour tous les couples comprenant cette unité de mesure, le test de compatibilité précité indique que le vecteur d'erreur $r_n^{ij}$ est incompatible avec l'estimation $M_n^k$ de sa matrice de covariance.

Paramétrisation du module de détection d'erreur

Les figures 9 et 10 montrent l'évolution au cours du temps t des quantités $\sqrt{M_n^1(l,l)}$, $\sqrt{M_n^2(l,l)}$ et $\sqrt{M_n^3(l,l)}$ (soit pour k=1, 2 et 3), pour la coordonnée d'indice $l$ qui est la latitude du navire, le système de positionnement comprenant N=3 unités de mesure inertielle (sur les figures 9 et 10, ces trois quantités sont notées respectivement $\sigma_M^1$, $\sigma_M^2$ et $\sigma_M^3$, pour alléger la notation).

Au cours de la phase de navigation représentée sur la figure 10, les capteurs communs utilisés sont :

- un loch électromagnétique, qui délivre des mesures tout au long de cette phase de navigation, et
- le système de positionnement GPS, qui n'est opérationnel que pendant un court intervalle de temps (le début de cet intervalle est repéré sur les figures 9 et 10 par la flèche « GPS »).

La figure 10 est une vue de détail de la figure 9, montrant plus en détail une partie de la phase de navigation considérée (cette partie comprenant l'intervalle de temps pendant lequel le système de positionnement GPS est opérationnel).

On constate sur cet exemple de phase de navigation que :

- lorsque les corrélations entre filtres de navigation sont fortes (lorsque le système de positionnement GPS est opérationnel), la technique de prise en compte de ces corrélations dans la matrice $M_n^k$, décrite ci-dessus, permet effectivement de réduire très fortement (ici d'un facteur 6) l'estimation de l'écart-type de la différence entre deux estimations de latitude déterminées par deux unités de mesure inertielle différentes ;

- l'écart-type $\sqrt{M_n^k(l,l)}$ est effectivement plus petit pour k=2 ou 3 que pour k=1 ; et

- l'écart-type $\sqrt{M_n^k(l,l)}$ présente des valeurs proches pour k=2 et pour k=3.

En pratique, le module de détection d'erreur est donc paramétré de préférence en choisissant pour k une valeur fixe, comprise entre 2 et N.

Architecture simplifiée du système

Différentes variantes peuvent être apportées au système 1 de localisation qui vient d'être décrit.

Par exemple, dans une variante simplifiée, le système de localisation conforme à l'invention peut comprendre seulement les N filtres de navigation « N-fusionnables » (et le module de fusion $F_{US}^N$ correspondant), au lieu des $N^2$ filtres de navigation du mode de réalisation décrit plus haut. Dans ce cas, en plus de l'estimation moyenne $y_F^N$ (qui est optimale), on peut prévoir de calculer des estimations moyennes supplémentaires en moyennant entre elles une partie seulement des estimations projetées $\hat{y}_{cor,n}^{N,1}(u), \ldots, \hat{y}_{cor,n}^{N,i}(u), \ldots, \hat{y}_{cor,n}^{N,N}(u)$ issues des filtres de navigation « N-fusionnables ». Ces estimations moyennes supplémentaires sont sous-optimales, mais utiles toutefois (dans cette variante simplifiée) en termes de robustesse, au cas où l'une des unités de mesure inertielle s'avère défaillante.

Dans une autre variante simplifiée, le système de localisation conforme à l'invention peut comprendre seulement (au lieu des $N^2$ filtres de navigation du mode de réalisation complet décrit plus haut) :

- les N filtres de navigation « N-fusionnables » et le module de fusion $F_{US}^N$ correspondant, et
- les N filtres de navigation « 1-fusionnables »,

pour pouvoir mettre en œuvre le module de détection d'erreur décrit plus haut.

## Revendications

1. Système (1) de localisation comprenant :

- plusieurs unités de mesure inertielle ($U_1$, $U_i$, $U_N$), chaque unité de mesure inertielle ($U_i$) comprenant au moins un capteur inertiel, accéléromètre ou gyromètre, configuré pour délivrer un signal inertiel ($S_i$) représentatif d'une accélération ou d'une vitesse angulaire de rotation de l'unité de mesure ($U_i$),
- au moins un capteur commun ($C_1$, Cp), configuré pour délivrer une mesure ($mes_n$) d'un paramètre de positionnement (y) du système (1), ladite mesure ($mes_n$) étant affectée par un bruit de mesure,
- pour chaque unité de mesure inertielle ($U_i$), un filtre de navigation ($F_i^k$) individuel configuré pour :

a) déterminer une estimation ($\hat{y}^{k,i}$) dudit paramètre de positionnement (y), sur la base du signal inertiel ($S_i$) délivré par ladite unité de mesure inertielle, et pour

b) déterminer une estimation corrigée ($\hat{y}_{cor}^{k,i}$) dudit paramètre de positionnement en ajoutant à ladite estimation ($\hat{y}^{k,i}$) déterminée précédemment à l'étape a) un terme correctif égal à un gain de correction ($K_n$) multiplié par une différence entre, d'une part, ladite mesure ($mes_n$) du paramètre de positionnement (y) du système, et, d'autre part, le produit d'une matrice de mesure ($H_n$) multipliée par ladite estimation du paramètre de positionnement ou multipliée par une somme de ladite estimation ($\hat{y}^{k,i}$) et d'une erreur estimée $\left(\hat{x}_{n_-}^{k,i}\right)$ affectant ladite estimation ($\hat{y}^{k,i}$), la matrice de mesure ($H_n$) représentant la manière dont ladite mesure ($mes_n$) dépend du paramètre de positionnement ($y$) du système, le gain de correction ($K_n$) étant déterminé en fonction d'une variance augmentée ($V_{aug}$) qui est supérieure à la variance du bruit de mesure ($R_n$) du capteur commun ($C_1$, $Cp$), et

- au moins un module de fusion ($F_{us}{}^k$) configuré pour déterminer une estimation moyenne $\left(\hat{y}_F^{k,l}\right)$ dudit paramètre de positionnement ($y$) du système en calculant une moyenne d'un nombre ($k$) donné desdites estimations corrigées $\left(\hat{y}_{cor}^{k,i}\right)$ du paramètre de positionnement, ledit nombre ($k$) étant supérieur ou égal à deux et inférieur ou égal au nombre ($N$) d'unités de mesure inertielle ($U_1$, $U_i$, $U_N$) que comprend le système de localisation (1),

le système étant configuré de sorte que chaque filtre de navigation ($F_i{}^k$) individuel exécute plusieurs fois successivement l'ensemble des étapes a) et b) sans tenir compte de ladite estimation moyenne $\left(\hat{y}_F^{k,l}\right)$ déterminée par le module de fusion ($F_{us}{}^k$).

2. Système (1) de localisation selon la revendication 1, dans lequel un écart relatif, entre les rapports signal sur bruit respectifs de deux quelconques desdits signaux inertiels ($S_i$) délivrés respectivement par lesdites unités de mesure ($U_1$, $U_i$, $U_N$), est inférieure à 30 %.

3. Système (1) de localisation selon l'une des revendications 1 ou 2, dans lequel un écart relatif entre ladite variance augmentée ($V_{aug}$) et une variance augmentée optimale est inférieur à 30%, ladite variance augmentée optimale étant égale à la variance du bruit de mesure ($R_n$) du capteur commun ($C1$, $Cp$) multipliée par le nombre ($k$) desdites estimations corrigées $\left(\hat{y}_{cor}^{k,i}\right)$ dudit paramètre de positionnement, dont la moyenne est calculée par le module de fusion ($F_{us}{}^k$) pour déterminer ladite estimation moyenne $\left(\hat{y}_F^{k,l}\right)$.

4. Système (1) de localisation selon l'une des revendications 1 à 3, dans lequel les filtres de navigation ($F_i{}^k$) individuels sont des filtres de Kalman modifiés, chacun de ces filtres étant configuré pour :

   - estimer une matrice de covariance $P_n^{k,i}$ d'un écart ($x$) entre ladite estimation ($\hat{y}^{k,i}$) du paramètre de positionnement du système et ce paramètre de positionnement ($y$), et pour
   - déterminer ledit gain de correction ($K_n$) de manière à ce qu'il présente, avec un gain optimal ($K_{n,opt}$), un écart relatif inférieur à 30%,

   ledit gain optimal ($K_{n,\,opt}$) étant égal à la quantité suivante : $P_n^{k,i}\ H_n{}^\mathsf{T}\ S_n{}^{-1}$ , où $H_n{}^\mathsf{T}$ est la matrice transposée de la matrice de mesure $H_n$, et où $S_n{}^{-1}$ est l'inverse d'une matrice de covariance d'innovation $S_n$ égale à $H_n\ P_n^{k,i}\ H_n{}^\mathsf{T}\ +\ V_{aug}$, $V_{aug}$ étant ladite variance augmentée.

5. Système (1) de localisation selon la revendication 4, dans lequel chaque filtre de navigation ($F_i{}^k$) individuel est configuré de sorte que, lors d'une première exécution de l'étape a), la matrice de covariance $P_n^{k,i}$ de l'écart ($x$) entre ladite estimation ($\hat{y}^{k,i}$) du paramètre de positionnement du système et ce paramètre de positionnement ($y$), est estimée en fonction d'une matrice de covariance initiale $\left(P_0^{k,i}\right)$, et d'une matrice de bruit de propagation ($Q$) comprenant au moins :

- une première composante ($Q^s$), représentative de la variance d'un bruit affectant le signal inertiel ($S_i$) délivré par l'unité de mesure inertielle ($U_i$) associée audit filtre de navigation individuel ($F_i{}^k$), et

- une deuxième composante $(Q_{aug}^e)$, représentative d'une variance corrigée qui est associée à des bruits externes indépendants de ladite unité de mesure inertielle ($U_i$), ladite variance corrigée étant supérieure et proportionnelle à la variance ($Q^e$) desdits bruits externes.

6. Système (1) de localisation selon l'une des revendications 4 ou 5, comprenant en outre, pour chaque unité de mesure inertielle ($U_i$), un filtre de Kalman conventionnel ($F_i{}^1$) configuré pour :

- déterminer une estimation supplémentaire ($\hat{y}^{1,i}$) dudit paramètre de positionnement (y) du système, sur la base du signal inertiel ($S_i$) délivré par ladite unité de mesure inertielle ($U_i$),

- estimer une matrice de covariance supplémentaire $P_n^{1,i}$ d'un écart (x) entre ladite estimation supplémentaire ($\hat{y}^{1,i}$) et ledit paramètre de positionnement (y) du système, et pour

- déterminer une estimation supplémentaire corrigée $(\hat{y}_{cor}^{1,i})$ dudit paramètre de positionnement en ajoutant à ladite estimation supplémentaire ($\hat{y}^{1,i}$) déterminée précédemment un terme correctif égal à un gain de correction supplémentaire multiplié par une différence entre, d'une part, ladite mesure ($mes_n$) du paramètre de position- nement (y) du système, et, d'autre part, le produit de la matrice de mesure ($H_n$) multipliée par ladite estimation supplémentaire ou multipliée par une somme de ladite estimation supplémentaire ($\hat{y}^{1,i}$) et d'une erreur estimée supplémentaire $(\hat{x}_{n-}^{1,i})$ affectant ladite estimation supplémentaire ($\hat{y}^{1,i}$), le gain de correction supplémentaire étant déterminé en fonction de la variance du bruit de mesure ($R_n$) du capteur commun.

7. Système (1) de localisation selon la revendication 6, comprenant en outre un module de détection d'erreur configuré de manière à, pour au moins deux desdites unités de mesure inertielle ($U_i$, $U_j$):

- calculer une différence $(r_n^{ij})$ entre les deux estimations supplémentaires corrigées $(\hat{y}_{cor,n}^{1,i} , \hat{y}_{cor,n}^{1,j})$ du paramètre de positionnement qui ont été déterminées respectivement sur la base des signaux inertiels ($S_i$, $S_j$) délivrés par ces deux unités de mesure inertielle ($U_i$, $U_j$),

- déterminer une matrice de covariance attendue ($M^k{}_n$) pour ladite différence $(r_n^{ij})$, en fonction des matrices de covariance supplémentaires $P_n^{1,i}$ et $P_n^{1,j}$ des deux estimations supplémentaires ($\hat{y}^{1,i},\hat{y}^{1,j}$) qui ont été déterminées respectivement sur la base des signaux inertiels ($S_i$, $S_j$) délivrés par lesdites deux unités de mesure inertielle ($U_i$, $U_j$), et en fonction des matrices de covariance $P_n^{k,i}$ et $P_n^{k,j}$ des deux estimations ($\hat{y}^{k,i},\hat{y}^{k,j}$) du paramètre de positionnement qui ont été déterminées respectivement sur la base de ces mêmes signaux inertiels ($S_i$, $S_j$),

- tester, au moyen d'un test statistique, si ladite différence est compatible, ou incompatible, avec ladite matrice de covariance attendue ($M^k{}_n$), et

- en cas d'incompatibilité, déterminer qu'une erreur est survenue dans le fonctionnement de l'une desdites deux unités de mesure inertielle ($U_i$, $U_j$).

8. Système (1) de localisation selon la revendication 7, dans lequel ledit test statistique est un test du khi2, et dans lequel la matrice de covariance attendue ($M^k{}_n$) est déterminée en fonction d'une matrice de covariance corrigée égale à :

$$P_n^{1,i} + P_n^{1,j} - \frac{1}{k-1}\left(P_n^{k,i} + P_n^{k,j} - P_n^{1,i} - P_n^{1,j}\right)$$

où k est le nombre d'estimations $(\hat{y}_{cor}^{k,i})$ du paramètre de positionnement (y) dont la moyenne est calculée par le

module de fusion ($F_{us}{}^k$) pour déterminer ladite estimation moyenne $(\hat{y}_F^{k,l})$.

9. Système (1) de localisation selon l'une des revendications 4 à 8, dans lequel le module de fusion ($F_{us}{}^k$) est configuré pour déterminer une estimation d'une matrice de covariance $(P_F^{k,l})$ de ladite estimation moyenne $(\hat{y}_F^{k,l})$, en fonction :

- d'une moyenne arithmétique desdites matrices de covariance $P_n^{k,i}$ associées respectivement auxdites estimations corrigée $(\hat{y}_{cor}^{k,i})$ du paramètre de positionnement dont la moyenne est calculée par le module de fusion ($F_{us}{}^k$) pour déterminer ladite estimation moyenne $(\hat{y}_F^{k,l})$, ou en fonction

- de l'inverse d'une moyenne arithmétique des inverses dites matrices de covariance $P_n^{k,i}$ associées respectivement auxdites estimations corrigées $(\hat{y}_{cor}^{k,i})$ du paramètre de positionnement dont la moyenne est calculée par le module de fusion ($F_{us}{}^k$) pour déterminer ladite estimation moyenne $(\hat{y}_F^{k,l})$.

10. Système (1) de localisation selon l'une des revendications 1 à 9, dans lequel un écart relatif entre deux desdits gains de correction ($K_n$), déterminés respectivement par deux quelconque desdits filtres de navigation ($F_i{}^k$) individuels, est inférieur à 20%.

11. Système (1) de localisation selon la revendication 10, dans lequel les filtres de navigation ($F_i{}^k$) sont synchrones, et dans lequel leurs gains de correction respectifs ($K_n$) sont égaux à un même gain de correction commun dont la valeur est, à chaque répétition des étapes b), calculée une seule fois pour l'ensemble desdits filtres de navigation.

12. Système (1) de localisation selon l'une des revendications 1 à 11, dans lequel les unités de mesure inertielle ($U_i$, $U_i$, $U_N$) sont au nombre de N, et dans lequel le module de fusion ($F_{us}{}^k$) est configuré pour :

- déterminer ladite estimation moyenne $(\hat{y}_F^{k,l})$ du paramètre de positionnement du système en calculant la moyenne d'un ensemble de k estimations corrigées $(\hat{y}_{cor}^{k,i})$ dudit paramètre de positionnement, parmi les N estimations corrigées $(\hat{y}_{cor}^{k,1},\ \hat{y}_{cor}^{k,i},\ \hat{y}_{cor}^{k,N})$ de ce paramètre de positionnement (y) déterminées respectivement par les filtres de navigation ($F_1{}^k$, $F_i{}^k$, $F_N{}^k$) individuels, le nombre entier k étant inférieur ou égal à N, et pour

- déterminer au moins une autre estimation moyenne $(\hat{y}_F^{k,l})$ du paramètre de positionnement du système, en calculant la moyenne d'un autre ensemble de k estimations corrigées $(\hat{y}_{cor}^{k,i})$ dudit paramètre de positionnement parmi les N estimations corrigées $(\hat{y}_{cor}^{k,1},\ \hat{y}_{cor}^{k,i},\ \hat{y}_{cor}^{k,N})$ de ce paramètre de positionnement (y) déterminées respectivement par les filtres de navigation ($F_1{}^k$, $F_i{}^k$, $F_N{}^k$) individuels.

13. Système (1) de localisation selon la revendication 12, dans lequel le module de fusion ($F_{us}{}^k$) est configuré de manière à, pour chaque ensemble de k estimations corrigées $(\hat{y}_{cor}^{k,i})$ dudit paramètre de positionnement parmi les N estimations corrigées $(\hat{y}_{cor}^{k,1},\ \hat{y}_{cor}^{k,i},\ \hat{y}_{cor}^{k,N})$ de ce paramètre de positionnement (y) déterminées par les filtres de navigation ($F_1{}^k$, $F_i{}^k$, $F_N{}^k$) individuels :

- déterminer une estimation moyenne $(\hat{y}_F^{k,l})$ du paramètre de positionnement égale à la moyenne des k estimations corrigées $\left(\hat{y}_{cor}^{k,i}\right)$ du paramètre de positionnement que comprend ledit ensemble.

**14.** Système (1) de localisation selon l'une des revendications 1 à 13, dans lequel ledit paramètre de positionnement (y) comprend l'une des grandeurs suivantes :

- une longitude, une latitude, ou une altitude repérant le système de localisation,
- ou une composante de la vitesse du système de localisation par rapport au référentiel terrestre,
- ou un angle de cap, un angle de roulis ou un angle de tangage du système de localisation, par rapport au référentiel terrestre.

**15.** Système (1) de localisation selon l'une des revendications 1 à 14, dans lequel chaque filtre de navigation ($F_i^k$) est configuré pour déterminer une estimation d'un vecteur d'état (y) du système, l'une des composantes de ce vecteur d'état étant ledit paramètre de positionnement, une autre composante comprenant l'une des grandeurs suivantes :

- une longitude, une latitude, ou une altitude repérant le système de localisation,
- une composante de la vitesse du système de localisation par rapport au référentiel terrestre,
- un angle de cap, un angle de roulis ou un angle de tangage du système de localisation, par rapport au référentiel terrestre,
- un biais de l'accéléromètre de l'une des unités de mesure inertielle,
- une anomalie de gravité,
- une vitesse d'un courant marin,
- un paramètre de calibration dudit capteur commun,

ou un écart entre l'une des grandeurs précédentes et une estimation de ladite grandeur.

**16.** Procédé de localisation d'un système (1), au cours duquel :

- plusieurs unités de mesure inertielle ($U_1$, $U_i$, $U_N$) délivrent chacune un signal inertiel ($S_i$) représentatif d'une accélération ou d'une vitesse angulaire de rotation de l'unité de mesure,
- au moins un capteur commun ($C_1$, $C_p$) délivre une mesure ($mes_n$) d'un paramètre de positionnement (y) du système (1), ladite mesure ($mes_n$) étant affectée par un bruit de mesure,
- pour chaque unité de mesure inertielle ($U_i$), un filtre de navigation ($F_i^k$) individuel :

   a) détermine une estimation ($\hat{y}^{k,i}$) dudit paramètre de positionnement (y), sur la base du signal inertiel ($S_i$) délivré par ladite unité de mesure inertielle, et

   b) détermine une estimation corrigée $\left(\hat{y}_{cor}^{k,i}\right)$ dudit paramètre de positionnement en ajoutant à ladite estimation ($\hat{y}^{k,i}$) déterminée précédemment à l'étape a) un terme correctif égal à un gain de correction ($K_n$) multiplié par une différence entre, d'une part, ladite mesure ($mes_n$) du paramètre de positionnement (y) du système, et, d'autre part, le produit d'une matrice de mesure ($H_n$) multipliée par ladite estimation du paramètre de positionnement ou multipliée par une somme de ladite estimation ($\hat{y}^{k,i}$) et d'une erreur estimée $\left(\hat{x}_{n_-}^{k,i}\right)$ affectant ladite estimation ($\hat{y}^{k,i}$), la matrice de mesure ($H_n$) représentant la manière dont ladite mesure ($mes_n$) dépend du paramètre de positionnement (y) du système, le gain de correction ($K_n$) étant déterminé en fonction d'une variance augmentée ($V_{aug}$) qui est supérieure à la variance du bruit de mesure ($R_n$) du capteur commun, et

- au moins un module de fusion ($F_{us}^k$) détermine une estimation moyenne $\left(\hat{y}_F^{k,l}\right)$ dudit paramètre de positionnement (y) du système en calculant une moyenne d'un nombre (k) donné desdites estimations corrigées $\left(\hat{y}_{cor}^{k,i}\right)$ du paramètre de positionnement, ledit nombre (k) étant supérieur ou égal à deux et inférieur ou égal au nombre (N) d'unités de mesure inertielle ($U_i$) que comprend le système (1),

chaque filtre de navigation ($F_i^k$) individuel exécutant plusieurs fois successivement l'ensemble des étapes a) et b) sans tenir compte de ladite estimation moyenne $(\hat{y}_F^{k,l})$ déterminée par le module de fusion ($F_{us}^k$).

## Patentansprüche

1. Standortbestimmungssystem (1) mit

   - mehreren Trägheitsmeßeinheiten ($U_1$, $U_i$, $U_N$), wobei jede Trägheitsheitsmeßeinheit ($U_i$) wenigstens einen Trägheitssensor, Beschleunigungsmesser oder Gyrometer aufweist, der dazu ausgelegt ist, ein Trägheitssignal ($S_i$) abzugeben, das für eine Beschleunigung oder eine Drehwinkelgeschwindigkeit der Meßeinheit ($U_i$) repräsentativ ist,
   - wenigstens einem gemeinsamen Sensor ($C_1$, Cp), der dazu ausgelegt ist, einen Meßwert ($mes_n$) eines Positionierungsparameters (y) des Systems (1) zu liefern, wobei der Meßwert ($mes_n$) durch ein Meßrauschen beeinträchtigt ist,
   - einem individuellen Navigationsfilter ($F_i^k$) für jede Trägheitsheitsmeßeinheit ($U_i$), das dazu ausgelegt ist,

   a) einen Schätzwert ($\hat{y}^{k,i}$) des Positionierungsparameters (y) auf der Grundlage des von der Trägheitsheitsmeßeinheit gelieferten Trägheitssignals ($S_i$) zu bestimmen und

   b) einen korrigierten Schätzwert $(\hat{y}_{cor}^{k,i})$ des Positionierungsparameters (y) zu bestimmen, indem beim Schritt a) zum zuvor bestimmten Schätzwert ($\hat{y}^{k,i}$) ein Korrekturwert hinzugefügt wird, der gleich einem Korrekturgewinn ($K_n$) ist, der mit einer Differenz zwischen dem Meßwert ($mes_n$) des Positionierungsparameters (y) des Systems einerseits und dem Produkt einer Meßmatrix ($H_n$) multipliziert mit dem Schätzwert des Positionierungsparameters oder multipliziert mit einer Summe aus dem Schätzwert ($\hat{y}^{k,i}$) und einem geschätzten Fehler $(\hat{x}_{n-}^{k,i})$, der den Schätzwert ($\hat{y}^{k,i}$) beeinträchtigt, andererseits multipliziert wird, wobei die Meßmatrix ($H_n$) die Weise darstellt, in der der Meßwert ($mes_n$) vom Positionierungsparameter (y) des Systems abhängt, wobei der Korrekturgewinn ($K_n$) in Abhängigkeit von einer erhöhten Varianz ($V_{aug}$) bestimmt wird, die größer als die Varianz des Meßrauschens ($R_n$) des gemeinsamen Sensors ($C_1$, Cp) ist, und

   - wenigstens einem Fusionsmodul ($F_{us}^k$), das dazu ausgelegt ist, einen mittleren Schätzwert $(\hat{y}_F^{k,l})$ des Positionierungsparameters (y) des Systems zu bestimmen, indem ein Mittelwert einer gegebenen Zahl (k) der korrigierten Schätzwerte $(\hat{y}_{cor}^{k,i})$ des Positionierungsparameters berechnet wird, wobei die Zahl (k) größer als oder gleich zwei und kleiner als oder gleich der Anzahl (N) Trägheitsmeßeinheiten ($U_1$, $U_i$, $U_N$), die das Standortbestimmungssystem (1) aufweist, ist,

   wobei das System so ausgelegt ist, daß jedes individuelle Navigationsfilter ($F_i^k$) die Gesamtheit der Schritte a) und b) mehrmals hintereinander durchführt, ohne dabei den vom Fusionsmodul ($F_{us}^k$) bestimmten mittleren Schätzwert $(\hat{y}_F^{k,l})$ zu berücksichtigen.

2. Standortbestimmungssystem (1) gemäß Anspruch 1, bei dem eine relative Abweichung zwischen den jeweiligen Signal-Rausch-Verhältnissen irgendwelcher zwei von den Trägheitsmeßeinheiten ($U_1$, $U_i$, $U_N$) abgegebenen Trägheitssignale ($S_i$) kleiner als 30% ist.

3. Standortbestimmungssystem (1) gemäß einem der Ansprüche 1 oder 2, bei dem eine relative Abweichung zwischen der erhöhten Varianz ($V_{aug}$) und einer optimalen erhöhten Varianz kleiner als 30% ist, wobei die optimale erhöhte Varianz gleich der Varianz des Meßrauschens ($R_n$) des gemeinsamen Sensors (C1, Cp) multipliziert mit der Anzahl (k) der korrigierten Schätzwerte $(\hat{y}_{cor}^{k,i})$ des Positionierungsparameters ist, dessen Mittelwert durch das Fusionsmodul ($F_{us}^k$) berechnet wird, um den mittleren Schätzwert $(\hat{y}_F^{k,l})$ zu bestimmen.

4. Standortbestimmungssystem (1) gemäß einem der Ansprüche 1 bis 3, bei dem die individuellen Navigationsfilter ($F_i^k$) modifizierte Kalman-Filter sind, wobei jedes dieser Filter dazu ausgelegt ist,

- eine Kovarianzmatrix $P_n^{k,i}$ einer Abweichung (x) zwischen dem Schätzwert ($\hat{y}^{k,i}$) des Positionierungsparameters des Systems und diesem Positionierungsparameter (y) zu schätzen und
- den Korrekturgewinn ($K_n$) so zu schätzen, daß er mit einem optimalen Gewinn ($K_{n,opt}$) eine relative Abweichung von weniger als 30% darstellt,

wobei der optimale Gewinn ($K_{n,opt}$) gleich der folgenden Menge ist: $P_n^{k,i}$ $H_n^T$ $S_n^{-1}$, wobei $H_n^T$ die transponierte Matrix der Meßmatrix $H_n$ ist und wobei $S_n^{-1}$ der Kehrwert einer Erneuerungskovarianzmatrix $S_n$ ist, die gleich $H_n$ $P_n^{k,i}$ $H_n^T + V_{aug}$ ist, wobei $V_{aug}$ die erhöhte Varianz ist.

5. Standortbestimmungssystem (1) gemäß Anspruch 4, bei dem jedes individuelle Navigationsfilter ($F_i^k$) so ausgelegt ist, daß die Kovarianzmatrix $P_n^{k,i}$ der Abweichung (x) zwischen dem Schätzwert ($\hat{y}^{k,i}$) des Positionierungsparameters des Systems und diesem Positionierungsparameter (y) bei der ersten Durchführung des Schritts a) in Abhängigkeit von einer anfänglichen Kovarianzmatrix $\left(P_0^{k,i}\right)$ und einer Rauschausbreitungsmatrix (Q) geschätzt wird, die wenigstens

- eine erste Komponente ($Q^s$), die die Varianz eines von der dem individuellen Navigationsfilter ($F_i^k$) zugeordneten Trägheitsheitsmeßeinheit ($U_i$) gelieferten Trägheitssignals ($S_i$) darstellt, und
- eine zweite Komponente $\left(Q_{aug}^e\right)$, die eine korrigierte Varianz darstellt, die unabhängigen äußeren Geräuschen der Trägheitsmeßeinheit ($U_i$) zugeordnet ist, wobei die korrigierte Varianz größer als und proportional zu der Varianz ($Q^e$) der äußeren Geräusche ist,

aufweist.

6. Standortbestimmungssystem (1) gemäß einem der Ansprüche 4 oder 5, das außerdem für jede Trägheitsmeßeinheit ($U_i$) ein konventionelles Kalman-Filter ($F_i^1$) aufweist, das dazu ausgelegt ist,

- einen zusätzlichen Schätzwert ($\hat{y}^{1,i}$) des Positionierungsparameters (y) des Systems auf der Grundlage des von der Trägheitsmeßeinheit ($U_i$) gelieferten Trägheitssignals ($S_i$) zu bestimmen,
- eine zusätzliche Kovarianzmatrix $P_n^{1,i}$ einer Abweichung (x) zwischen dem zusätzlichen Schätzwert ($\hat{y}^{1,i}$) und dem Positionierungsparameter (y) des Systems zu schätzen und
- einen korrigierten zusätzlichen Schätzwert ($\hat{y}^{1,i}_{cor}$) des Positionierungsparameters zu bestimmen, indem zum zuvor bestimmten zusätzlichen Schätzwert ($\hat{y}^{1,i}$) ein Korrekturglied hinzugefügt wird, das gleich einem zusätzlichen Korrekturgewinn multipliziert mit einer Differenz zwischen dem Meßwert ($mes_n$) des Positionierungsparameters (y) des Systems einerseits und dem Produkt der Meßmatrix ($H_n$) multipliziert mit dem zusätzlichen Schätzwert oder multipliziert mit einer Summe aus dem zusätzlichen Schätzwert ($\hat{y}^{1,i}$) und einem zusätzlichen geschätzten Fehler $\left(\hat{x}_{n_-}^{1,i}\right)$, der die zusätzliche Schätzung ($\hat{y}^{1,i}$) beeinträchtigt, andererseits ist, wobei der zusätzliche Korrekturgewinn in Abhängigkeit von der Varianz des Meßrauschens ($R_n$) des gemeinsamen Sensors bestimmt wird.

7. Standortbestimmungssystem (1) gemäß Anspruch 6, das außerdem ein Fehlererkennungsmodul aufweist, das dazu ausgelegt ist, für wenigstens zwei der Trägheitsmeßeinheiten ($U_i$, $U_j$)

- eine Differenz $\left(r_n^{ij}\right)$ zwischen den beiden korrigierten zusätzlichen Schätzwerten $\left(\hat{y}_{cor,n}^{1,i},\ \hat{y}_{cor,n}^{1,j}\right)$ des Positionierungsparameters, die jeweils auf der Grundlage der von den beiden Trägheitsmeßeinheiten ($U_i$, $U_j$) gelieferten Trägheitssignale ($S_i$, $S_j$) bestimmt worden sind, zu berechnen,

- eine Matrix ($M^k_n$) der erwarteten Kovarianz für die Differenz $\left( r_n^{ij} \right)$ in Abhängigkeit von den zusätzlichen Kovarianzmatrizen $P_n^{1,i}$ und $P_n^{1,j}$ der zusätzlichen Schätzwerte ($\hat{y}^{1,i}$, $\hat{y}^{1,j}$) die jeweils auf der Grundlage der von den beiden Trägheitsmeßeinheiten ($U_i$, $U_j$) gelieferten Trägheitssignale ($S_i$, $S_j$) und in Abhängigkeit von den Kovarianzmatrizen $P_n^{k,i}$ und $P_n^{k,j}$ der beiden Schätzwerte ($\hat{y}^{k,i}$, $\hat{y}^{k,j}$) des Positionierungsparameters, die jeweils auf der Grundlage derselben Trägheitssignale ($S_i$, $S_j$) bestimmt worden sind, zu bestimmen,

- mittels eines statistischen Tests zu testen, ob die Differenz mit der Matrix ($M^k_n$) der erwarteten Kovarianz kompatibel oder nicht kompatibel ist, und

- im Fall von nicht gegebener Kompatibilität zu bestimmen, daß beim Betrieb einer der beiden Trägheitsmeßeinheiten ($U_i$, $U_j$) ein Fehler aufgetreten ist.

8.  Standortbestimmungssystem (1) gemäß Anspruch 7, bei dem der statistische Test ein Test des khi2 ist und bei dem die Matrix ($M^k_n$) der erwarteten Kovarianz in Abhängigkeit von einer korrigierten Kovarianzmatrix bestimmt wird, die gleich $P_n^{1,i} + P_n^{1,j} - \frac{1}{k-1}\left( P_n^{k,i} + P_n^{k,j} - P_n^{1,i} - P_n^{1,j} \right)$ ist,

    wobei k die Anzahl Schätzwerte $\left( \hat{y}_{cor}^{k,i} \right)$ des Positionierungsparameters (y) ist, deren Mittelwert durch das Fusionsmodul ($F_{us}{}^k$) berechnet wird, um den mittleren Schätzwert $\left( \hat{y}_F^{k,l} \right)$ zu bestimmen.

9.  Standortbestimmungssystem (1) gemäß einem der Ansprüche 4 bis 8, bei dem das Fusionsmodul ($F_{us}{}^k$) dazu ausgelegt ist, einen Schätzwert einer Kovarianzmatrix $\left( P_F^{k,l} \right)$ des mittleren Schätzwerts $\left( \hat{y}_F^{k,l} \right)$ in Abhängigkeit von

    - einem arithmetischen Mittel der den korrigierten Schätzwerten $\left( \hat{y}_{cor}^{k,i} \right)$ des Positionierungsparameters jeweils zugeordneten Kovarianzmatrizen $P_n^{k,i}$, deren Mittelwert durch das Fusionsmodul ($F_{us}{}^k$) berechnet wird, um den mittleren Schätzwert $\left( \hat{y}_F^{k,l} \right)$ zu bestimmen, oder in Abhängigkeit von

    - dem Kehrwert eines arithmetischen Mittels der Kehrwerte der den korrigierten Schätzwerten $\left( \hat{y}_{cor}^{k,i} \right)$ des Positionierungsparameters jeweils zugeordneten Kovarianzmatrizen $P_n^{k,i}$, deren Mittelwert durch das Fusionsmodul ($F_{us}{}^k$) berechnet wird, um den mittleren Schätzwert $\left( \hat{y}_F^{k,l} \right)$ zu bestimmen,

    zu bestimmen.

10. Standortbestimmungssystem (1) gemäß einem der Ansprüche 1 bis 9, bei dem eine relative Abweichung zwischen zwei der jeweils durch irgendwelche zwei der individuellen Navigationsfilter ($F_i^k$) bestimmten Korrekturgewinne ($K_n$) kleiner als 20% ist.

11. Standortbestimmungssystem (1) gemäß Anspruch 10, bei dem die Navigationsfilter ($F_i^k$) synchron sind und bei dem deren jeweilige Korrekturgewinne ($K_n$) gleich einem selben gemeinsamen Korrekturgewinn sind, dessen Wert bei jeder Wiederholung der Schritte b) ein einziges Mal für die Gesamtheit der Navigationsfilter berechnet wird.

12. Standortbestimmungssystem (1) gemäß einem der Ansprüche 1 bis 11, bei dem die Anzahl Trägheitsmeßeinheiten ($U_1$, $U_i$, $U_N$) N beträgt und bei dem das Fusionsmodul ($F_{us}{}^k$) dazu ausgelegt ist,

    - den mittleren Schätzwert $\left( \hat{y}_F^{k,l} \right)$ des Positionierungsparameters des Systems zu bestimmen, indem der Mittelwert einer Gesamtheit von k korrigierten Schätzwerten $\left( \hat{y}_{cor}^{k,i} \right)$ des Positionierungsparameters unter den N korrigierten Schätzwerten $\left(\hat{y}_{cor}^{k,1}, \hat{y}_{cor}^{k,i}, \hat{y}_{cor}^{k,N}\right)$ dieses durch die individuellen Navigationsfilter ($F_1^k$, $F_i^k$, $F_N^k$,) bestimmten Positionierungsparameters (y) berechnet wird, wobei die ganze Zahl k kleiner als oder gleich N ist, und

- wenigstens einen anderen mittleren Schätzwert $\left(\hat{y}_F^{k,l}\right)$ des Positionierungsparameters des Systems zu bestimmen, indem der Mittelwert einer anderen Gesamtheit von k korrigierten Schätzwerten $\left(\hat{y}_{cor}^{k,i}\right)$ des Positionierungsparameters unter den N korrigierten Schätzwerten $\left(\hat{y}_{cor}^{k,1}, \hat{y}_{cor}^{k,i}, \hat{y}_{cor}^{k,N}\right)$ dieses durch die individuellen Navigationsfilter ($F_1^k$, $F_i^k$, $F_N^k$,) bestimmten Positionierungsparameters (y) berechnet wird.

**13.** Standortbestimmungssystem (1) gemäß Anspruch 12, bei dem das Fusionsmodul ($F_{us}^k$) so ausgelegt ist, daß es für jede Gesamtheit von k korrigierten Schätzwerten $\left(\hat{y}_{cor}^{k,i}\right)$ des Positionierungsparameters unter den N korrigierten Schätzwerten $\left(\hat{y}_{cor}^{k,1}, \hat{y}_{cor}^{k,i}, \hat{y}_{cor}^{k,N}\right)$ dieses durch die individuellen Navigationsfilter ($F_1^k$, $F_i^k$, $F_N^k$,) bestimmten Positionierungsparameters (y)

- einen mittleren Schätzwert $\left(\hat{y}_F^{k,l}\right)$ des Positionierungsparameters bestimmt, der gleich dem Mittelwert der k korrigierten Schätzwerte $\left(\hat{y}_{cor}^{k,i}\right)$ des Positionierungsparameters ist, den die Gesamtheit beinhaltet.

**14.** Standortbestimmungssystem (1) gemäß einem der Ansprüche 1 bis 13, bei dem der Positionierungsparameter eine der folgenden Größen aufweist:

- einen Längengrad, einen Breitengrad oder eine Höhe, die das Standortbestimmungssystem erkennt,
- oder eine Geschwindigkeitskomponente des Standortbestimmungssystems gegenüber dem terrestrischen Bezugssystem,
- oder einen Kurswinkel, einen Rollwinkel oder einen Neigungswinkel des Standortbestimmungssystems gegenüber dem terrestrischen Bezugssystem.

**15.** Standortbestimmungssystem (1) gemäß einem der Ansprüche 1 bis 14, bei dem jeder Navigationsfilter ($F_i^k$) dazu ausgelegt ist, einen Schätzwert eines Zustandsvektors (y) des Systems zu bestimmen, wobei eine der Komponenten dieses Zustandsvektors der Positionierungsparameter ist, wobei eine andere Komponente eine der folgenden Größen aufweist:

- einen Längengrad, einen Breitengrad oder eine Höhe, die das Standortbestimmungssystem erkennt,
- eine Geschwindigkeitskomponente des Standortbestimmungssystems gegenüber dem terrestrischen Bezugssystem,
- einen Kurswinkel, einen Rollwinkel oder einen Neigungswinkel des Standortbestimmungssystems gegenüber dem terrestrischen Bezugssystem,
- eine Angabe des Beschleunigungsmessers einer der Trägheitsmeßeinheiten,
- eine Schwerkraftanomalie,
- die Geschwindigkeit einer Meeresströmung,
- einen Kalibrierparameter des gemeinsamen Sensors

oder eine Abweichung zwischen den vorgenannten Größen und einem Schätzwert dieser Größe.

**16.** Verfahren zur Standortbestimmung eines Systems (1) im Verlauf dessen:

- mehrere Trägheitsmeßeinheiten ($U_1$, $U_i$, $U_N$) geben jeweils ein Trägheitssignal ($S_i$) abzugeben, das für eine Beschleunigung oder eine Drehwinkelgeschwindigkeit der Meßeinheit repräsentativ ist,
- wenigstens ein gemeinsamer Sensor ($C_1$, Cp) einen Meßwert ($mes_n$) eines Positionierungsparameters (y) des Systems (1) abgibt, wobei der Meßwert ($mes_n$) durch ein Meßrauschen beeinträchtigt ist,
- ein individuelles Navigationsfilter ($F_i^k$) für jede Trägheitsheitsmeßeinheit ($U_i$):

a) einen Schätzwert ($\hat{y}^{k,i}$) des Positionierungsparameters (y) auf der Grundlage des von der Trägheitsheits-meßeinheit abgegebenen Trägheitssignals ($S_i$) bestimmt und

b) einen korrigierten Schätzwert $\left(\hat{y}_{cor}^{k,i}\right)$ des Positionierungsparameters (y) bestimmt, indem beim Schritt a) zum zuvor bestimmten Schätzwert ($\hat{y}^{k,i}$) ein Korrekturwert hinzugefügt wird, der gleich einem Korrektur-gewinn ($K_n$) ist, der mit einer Differenz zwischen dem Meßwert ($mes_n$) des Positionierungsparameters (y) des Systems einerseits und dem Produkt einer Meßmatrix ($H_n$) multipliziert mit dem Schätzwert des Positionierungsparameters oder multipliziert mit einer Summe aus dem Schätzwert ($\hat{y}^{k,i}$) und einem geschätzten Fehler $\left(\hat{x}_{n_-}^{k,i}\right)$, der den Schätzwert ($\hat{y}^{k,i}$) beeinträchtigt, andererseits multipliziert wird, wobei die Meßmatrix ($H_n$) die Weise darstellt, in der der Meßwert ($mes_n$) vom Positionierungsparameter (y) des Systems abhängt, wobei der Korrekturgewinn ($K_n$) in Abhängigkeit von einer erhöhten Varianz ($V_{aug}$) bestimmt wird, die größer als die Varianz des Meßrauschens ($R_n$) des gemeinsamen Sensors ($C_1$, Cp) ist, und

- wenigstens ein Fusionsmodul ($F_{us}^k$) einen mittleren Schätzwert $\left(\hat{y}_F^{k,l}\right)$ des Positionierungsparameters (y) des Systems bestimmt, indem ein Mittelwert einer gegebenen Zahl (k) der korrigierten Schätzwerte $\left(\hat{y}_{cor}^{k,i}\right)$ des Positionierungsparameters berechnet wird, wobei die Zahl (k) größer als oder gleich zwei und kleiner als oder gleich der Anzahl (N) Trägheitsmeßeinheiten ($U_1$, $U_i$, $U_N$), die das Standortbestimmungssystem (1) aufweist, ist,

wobei jedes individuelle Navigationsfilter ($F_i^k$) die Gesamtheit der Schritte a) und b) mehrmals hintereinander durchführt, ohne dabei den vom Fusionsmodul ($F_{us}^k$) bestimmten mittleren Schätzwert $\left(\hat{y}_F^{k,l}\right)$ zu berücksichtigen.

## Claims

1. A positioning system (1) comprising:

   - several inertial measurement units ($U_1$, $U_i$, $U_N$), each inertial measurement unit ($U_i$) comprising at least one inertial sensor, accelerometer or gyrometer, configured to provide an inertial signal ($S_i$) representative of an acceleration or an angular speed of rotation of the measurement unit ($U_i$),
   - at least one common sensor ($C_1$, Cp), configured to provide a measurement ($mes_n$) of a positioning parameter (y) of the system (1), said measurement ($mes_n$) being affected by a measurement noise,
   - for each inertial measurement unit ($U_i$), an individual navigation filter ($F_i^k$) configured to:

      a) determine an estimate ($\hat{y}^{k,i}$) of said positioning parameter (y), on the basis of the inertial signal ($S_i$) provided by said inertial measurement unit, and to

      b) determine a corrected estimate $\left(\hat{y}_{cor}^{k,i}\right)$ of said positioning parameter by adding to said estimate ($\hat{y}^{k,i}$) previously determined at step a) a corrective term equal to a correction gain ($K_n$) multiplied by a difference between, on the one hand, said measurement ($mes_n$) of the positioning parameter (y) of the system, and, on the other hand, the product of a measurement matrix ($H_n$) multiplied by said estimate of the positioning parameter or multiplied by a sum of said estimate ($\hat{y}^{k,i}$) and of an estimated error $\left(\hat{x}_{n_-}^{k,i}\right)$ affecting said estimate ($\hat{y}^{k,i}$), the measurement matrix ($H_n$) representing the way said measurement ($mes_n$) depends on the positioning parameter (y) of the system, the correction gain ($K_n$) being determined as a function of an augmented variance ($V_{aug}$) that is higher than the variance of the measurement noise ($R_n$) of the common sensor ($C_1$, Cp), and

   - at least one fusion module ($F_{us}^k$) configured to determine a mean estimate $\left(\hat{y}_F^{k,l}\right)$ of said positioning parameter (y) of the system by calculating a mean of a given number (k) of said corrected estimates $\left(\hat{y}_{cor}^{k,i}\right)$ of the positioning parameter, said number (k) being higher than or equal to two and lower than or equal to the number (N) of inertial measurement units ($U_1$, $U_i$, $U_N$) that are included in the positioning system (1),

the system being configured so that each individual navigation filter ($F_i^k$) executes several times, successively, all the steps a) and b) without taking into account said mean estimate $\left(\widehat{y}_F^{k,l}\right)$ determined by the fusion module ($F_{us}^k$).

2. The positioning system (1) according to claim 1, wherein a relative deviation, between the respective signal-to-noise ratios of any two of said inertial signals ($S_i$) respectively provided by said measurement units ($U_1$, $U_i$, $U_N$), is lower than 30 %.

3. The positioning system (1) according to any one of claims 1 or 2, wherein a relative deviation between said augmented variance ($V_{aug}$) and an optimum augmented variance is lower than 30%, said optimum augmented variance being equal to the variance of the measurement noise ($R_n$) of the common sensor (C1, Cp) multiplied by the number (k) of said corrected estimates $\left(\widehat{y}_{cor}^{k,i}\right)$ of said positioning parameter, the mean of which is calculated by the fusion module ($F_{us}^k$) to determine said mean estimate $\left(\widehat{y}_F^{k,l}\right)$.

4. The positioning system (1) according to any one of claims 1 to 3, wherein the individual navigation filters ($F_i^k$) are modified Kalman filters, each of these filters being configured to:

    - estimate a covariance matrix $P_n^{k,i}$ of a deviation (x) between said estimate ($\widehat{y}^{k,i}$) of the positioning parameter of the system and this positioning parameter (y), and to
    - determine said correction gain ($K_n$) so that it has, with an optimum gain ($K_{n,opt}$), a relative deviation lower than 30%,

said optimum gain ($K_{n,opt}$) being equal to the following quantity: $P_n^{k,i}$ $H_n^T S_n^{-1}$, where $H_n^T$ is the transposed matrix of the measurement matrix $H_n$, and where $S_n^{-1}$ is the inverse of an innovation covariance matrix $S_n$ equal to $H_n$ $P_n^{k,i}$ $H_n^T + V_{aug}$, $V_{aug}$ being said augmented variance.

5. The positioning system (1) according to claim 4, wherein each individual navigation filter ($F_i^k$) is configured so that, during a first execution of step a), the covariance matrix $P_n^{k,i}$ of the deviation (x) between said estimate ($\widehat{y}^{k,i}$) of the positioning parameter of the system and this positioning parameter (y), is estimated as a function of an initial covariance matrix $\left(P_0^{k,i}\right)$ and of a propagation noise matrix (Q) comprising at least:

    - a first component ($Q^s$), representative of the variance of a noise affecting the inertial signal ($S_i$) provided by the inertial measurement unit ($U_i$) associated with said individual navigation filter ($F_i^k$), and
    - a second component $\left(Q_{aug}^e\right)$, representative of a corrected variance that is associated with external noises independent of said inertial measurement unit ($U_i$), said corrected variance being higher than and proportional to the variance ($Q^e$) of said external noises.

6. The positioning system (1) according to one of claims 4 or 5, further comprising, for each inertial measurement unit ($U_i$), a conventional Kalman filter ($F_i^1$) configured to:

    - determine an additional estimate ($\widehat{y}^{1,i}$) of said positioning parameter (y) of the system, on the basis of the inertial signal ($S_i$) provided by said inertial measurement unit ($U_i$),
    - estimate an additional covariance matrix $P_n^{1,i}$ of a deviation (x) between said additional estimate ($\widehat{y}^{1,i}$) and said positioning parameter (*y*) of the system, and to

- determine a corrected additional estimate $(\hat{y}_{cor}^{1,i})$ of said positioning parameter by adding to said previously determined additional estimate ($\hat{y}^{1,i}$) a corrective term equal to an additional correction gain multiplied by a difference between, on the one hand, said measurement (*mes$_n$*) of the positioning parameter (y) of the system and, on the other hand, the product of the measurement matrix (H$_n$) multiplied by said additional estimate or multiplied by a sum of said additional estimate ($\hat{y}^{1,i}$) and of an additional estimated error $(\hat{x}_{n-}^{1,i})$ affecting said additional estimate ($\hat{y}^{1,i}$), the additional correction gain being determined as a function of the variance of the measurement noise (R$_n$) of the common sensor.

7.  The positioning system (1) according to claim 6, further comprising an error detection module configured so as, for at least two of said inertial measurement units (U$_i$, U$_j$), to:

    - calculate a difference $(r_n^{ij})$ between the two corrected additional estimates $(\hat{y}_{cor,n}^{1,i}, \ \hat{y}_{cor,n}^{1,j})$ of the positioning parameter that are respectively determined on the basis of the inertial signals (S$_i$, S$_j$) provided by these two inertial measurement units (U$_i$, U$_j$),

    - determine an expected covariance matrix (M$^k$$_n$) for said difference $(r_n^{ij})$, as a function of the additional covariance matrices $P_n^{1,i}$ et $P_n^{1,j}$ of the two additional estimates ($\hat{y}^{1,i}$, $\hat{y}^{1,j}$) that have been respectively determined on the basis of the inertial signals (S$_i$, S$_j$) provided by said two inertial measurement units (U$_i$, U$_j$), and as a function of the covariance matrices $P_n^{k,i}$ et $P_n^{k,j}$ of the two estimates ($\hat{y}^{k,i}$, $\hat{y}^{k,j}$) of the positioning parameter that have been respectively determined on the basis of these same inertial signals (S$_i$, S$_j$),

    - test, by means of a statistic test, if said difference is compatible, or incompatible, with said expected covariance matrix (M$^k$$_n$), and
    - in case of incompatibility, determine that an error has occurred in the operation of one of said two inertial measurement units (U$_i$, U$_j$).

8.  The positioning system (1) according to claim 7, wherein said statistic test is a khi2 test, and wherein the expected covariance matrix (M$^k$$_n$) is determined as a function of a corrected covariance matrix equal to:

$$P_n^{1,i} + P_n^{1,j} - \frac{1}{k-1}\left(P_n^{k,i} + P_n^{k,j} - P_n^{1,i} - P_n^{1,j}\right)$$

where k is the number of estimates $(\hat{y}_{cor}^{k,i})$ of the positioning parameter (y) whose mean is calculated by the fusion module (F$_{us}$$^k$) to determine said mean estimate $(\hat{y}_F^{k,l})$.

9.  The positioning system (1) according to any one of claims 4 to 8, wherein the fusion module (F$_{us}$$^k$) is configured to determine an estimate of a covariance matrix $(P_F^{k,l})$ of said mean estimate $(\hat{y}_F^{k,l})$, as a function:

    - of an arithmetic mean of said covariance matrices $P_n^{k,i}$ respectively associated with said corrected estimates $(\hat{y}_{cor}^{k,i})$ of the positioning parameter whose mean is calculated by the fusion module (F$_{us}$$^k$) to determine said mean estimate $(\hat{y}_F^{k,l})$, or as a function

    - of the inverse of an arithmetic mean of the inverses of said covariance matrices $P_n^{k,i}$ respectively associated with said corrected estimates $(\hat{y}_{cor}^{k,i})$ of the positioning parameter, whose mean is calculated by the fusion module ($F_{us}{}^k$) to determine said mean estimate $(\hat{y}_F^{k,l})$.

10. The positioning system (1) according to any one of claims 1 to 9, wherein a relative deviation between two of said correction gains ($K_n$), respectively determined by any two of said individual navigation filters ($F_i{}^k$), is lower than 20%.

11. The positioning system (1) according to claim 10, wherein the navigation filters ($F_i{}^k$) are synchronous, and wherein their respective correction gains ($K_n$) are equal to a same common correction gain whose value is, at each repetition of steps b), calculated only once for all said navigation filters.

12. The positioning system (1) according to one of claims 1 to 11, wherein the inertial measurement units ($U_i$, $U_i$, $U_N$) are N in number, and wherein the fusion module ($F_{us}{}^k$) is configured to:

- determine said mean estimate $(\hat{y}_F^{k,l})$ of the positioning parameter of the system by calculating the mean of a set of k corrected estimates $(\hat{y}_{cor}^{k,i})$ of said positioning parameter, among the N corrected estimates $(\hat{y}_{cor}^{k,1},\ \hat{y}_{cor}^{k,i},\ \hat{y}_{cor}^{k,N})$ of this positioning parameter (y) respectively determined by the individual navigation filters ($F_1{}^k$, $F_i{}^k$, $F_N{}^k$), the integer number k being lower than or equal to N, and to

- determine at least one other mean estimate $(\hat{y}_F^{k,l})$ of the positioning parameter of the system, by calculating the mean of another set of k corrected estimates $(\hat{y}_{cor}^{k,i})$ of said positioning parameter among the N corrected estimates $(\hat{y}_{cor}^{k,1},\ \hat{y}_{cor}^{k,i},\ \hat{y}_{cor}^{k,N})$ of this positioning parameter (*y*) respectively determined by the individual navigation filters ($F_1{}^k$, $F_i{}^k$, $F_N{}^k$).

13. The positioning system (1) according to claim 12, wherein the fusion module ($F_{us}{}^k$) is configured so as, for each set of k corrected estimates $(\hat{y}_{cor}^{k,i})$ of said positioning parameter among the N corrected estimates $(\hat{y}_{cor}^{k,1},\ \hat{y}_{cor}^{k,i},\ \hat{y}_{cor}^{k,N})$ of this positioning parameter (y) determined by the individual navigation filters ($F_1{}^k$, $F_i{}^k$, $F_N{}^k$), to:

- determine a mean estimate $(\hat{y}_F^{k,l})$ of the positioning parameter equal to the mean of the k corrected estimates $(\hat{y}_{cor}^{k,i})$ of the positioning parameter included in said set.

14. The positioning system (1) according to any one of claims 1 to 13, wherein said positioning parameter (y) comprises one of the following parameters:

- a longitude, a latitude, or an altitude locating the positioning system,
- or a component of the speed of the positioning system with respect to the terrestrial reference system,
- or a heading angle, a roll angle or a pitch angle of the positioning system, with respect to the terrestrial reference system.

15. The positioning system (1) according to any one of claims 1 to 14, wherein each navigation filter ($F_i{}^k$) is configured to determine an estimate of the state vector (y) of the system, one of the components of this state vector being said positioning parameter, another component comprising one of the following parameters:

- a longitude, a latitude, or an altitude locating the positioning system,

- a component of the speed of the positioning system with respect to the terrestrial reference system,
- a heading angle, a roll angle or a pitch angle of the positioning system, with respect to the terrestrial reference system,
- a bias of the accelerometer of one of the inertial measurement units,
- a gravity anomaly,
- a speed of a sea current,
- a calibration parameter of said common sensor,

or a deviation between one of the previous parameters and an estimate of said parameter.

16. A method for positioning a system (1), in which:

- several inertial measurement units ($U_i$, $U_i$, $U_N$) each provide an inertial signal ($S_i$) representative of an acceleration or of an angular speed of the measurement unit,
- at least one common sensor ($C_1$, Cp) provides a measurement ($mes_n$) of a positioning parameter (y) of the system (1), said measurement ($mes_n$) being affected by a measurement noise,
- for each inertial measurement unit ($U_i$), an individual navigation filter ($F_i{}^k$):

a) determines an estimate ($\hat{y}^{k,i}$) of said positioning parameter (y), on the basis of the inertial signal ($S_i$) provided by said inertial measurement unit, and

b) determines a corrected estimate $\left(\hat{y}_{cor}^{k,i}\right)$ of said positioning parameter by adding to said estimate ($\hat{y}^{k,i}$) previously determined at step a) a corrective term equal to a correction gain ($K_n$) multiplied by a difference between, on the one hand, said measurement ($mes_n$) of the positioning parameter (y) of the system, and, on the other hand, the product of a measurement matrix ($H_n$) multiplied by said estimate of the positioning parameter or multiplied by a sum of said estimate ($\hat{y}^{k,i}$) and of an estimated error $\left(\hat{x}_{n_-}^{k,i}\right)$ affecting said estimate ($\hat{y}^{k,i}$), the measurement matrix ($H_n$) representing the way said measurement ($mes_n$) depends on the positioning parameter (y) of the system, the correction gain ($K_n$) being determined as a function of an augmented variance ($V_{aug}$) that is higher than the variance of the measurement noise ($R_n$) of the common sensor, and

- at least one fusion module ($F_{us}{}^k$) determines a mean estimate $\left(\hat{y}_F^{k,l}\right)$ of said positioning parameter (y) of the system by calculating a mean of a given number (k) of said corrected estimates $\left(\hat{y}_{cor}^{k,i}\right)$ of the positioning parameter, said number (k) being higher than or equal to two and lower than or equal to the number (N) of inertial measurement units ($U_i$) included in the system (1),

each individual navigation filter ($F_i{}^k$) executing several times, successively, all the steps a) and b) without taking into account said mean estimate $\left(\hat{y}_F^{k,l}\right)$ determined by the fusion module ($F_{us}{}^k$).

# Fig.1

# Fig.9

# Fig.10

**Fig.2**

EP 3 623 758 B1

Fig.3

# Fig.4

# Fig.5

# Fig.6

# Fig.7

# Fig.8

**EP 3 623 758 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2016223683 A1

**Littérature non-brevet citée dans la description**

- **NEAL A. CARLSON.** Federated Square Root Filter for Decentralized Parallel Processes. *IEEE Transactions on aerospace and electronic systems,* Mai 1990, vol. 26 (3), 517-525